(19) **Europäisches Patentamt**
**European Patent Office**
**Office européen des brevets**

(11) **EP 4 190 739 B1**

(12) **EUROPÄISCHE PATENTSCHRIFT**

(45) Veröffentlichungstag und Bekanntmachung des Hinweises auf die Patenterteilung:
**26.02.2025 Patentblatt 2025/09**

(21) Anmeldenummer: **22207659.8**

(22) Anmeldetag: **16.11.2022**

(51) Internationale Patentklassifikation (IPC):
**B66C 21/00** (2006.01)

(52) Gemeinsame Patentklassifikation (CPC):
**B66C 21/00**

(54) **VERFAHREN ZUM REGELN EINER BEWEGUNG EINER LAST IN EINEM ARBEITSRAUM EINER LASTENTRANSPORTEINRICHTUNG**

METHOD FOR REGULATING A MOVEMENT OF A LOAD IN A WORKING SPACE OF A LOAD TRANSPORT DEVICE

PROCÉDÉ DE RÉGULATION DU MOUVEMENT D'UNE CHARGE DANS UN ESPACE DE TRAVAIL D'UN DISPOSITIF DE TRANSPORT DE CHARGE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(30) Priorität: **06.12.2021 AT 1922021**

(43) Veröffentlichungstag der Anmeldung:
**07.06.2023 Patentblatt 2023/23**

(73) Patentinhaber: **Hans Künz GmbH**
**6971 Hard (Vbg.) (AT)**

(72) Erfinder:
• **Eberharter, Johannes Karl**
**6971 Hard (AT)**

• **Lang, Robert**
**6020 Innsbruck (AT)**
• **Klapper, Georg**
**6971 Hard (AT)**

(74) Vertreter: **Torggler & Hofmann Patentanwälte - Rankweil**
**Torggler & Hofmann Patentanwälte GmbH & Co KG**
**Hörnlingerstraße 3**
**Postfach 5**
**6830 Rankweil (AT)**

(56) Entgegenhaltungen:
**DE-A1- 102009 050 729     KR-A- 20120 057 185**

**EP 4 190 739 B1**

**Beschreibung**

Die vorliegende Erfindung betrifft ein Verfahren zum Regeln einer Bewegung einer Last in einem Arbeitsraum einer Lastentransporteinrichtung mittels einer Regeleinrichtung der Lastentransporteinrichtung, wobei die Lastentransporteinrichtung einen Lastenträger und zumindest eine am Lastenträger befestigte Lastaufnahmevorrichtung zur Aufnahme der Last und zumindest drei Positionierseile und zumindest drei voneinander distanziert angeordnete Aufhängevorrichtungen aufweist, wobei jede Aufhängevorrichtung zumindest eine Positionierseilwinde zum Auf- und Abwickeln eines der Positionierseile aufweist und der Lastenträger mittels der Positionierseile an den Aufhängevorrichtungen hängt, wobei der Lastenträger und die daran befestigte Lastaufnahmevorrichtung durch Ansteuern der Positionierseilwinden im und/oder über dem Arbeitsraum verfahrbar sind, wobei das Verfahren die Schritte umfasst:

- Erfassen von aktuell einzustellenden Zielkoordinaten eines Zielpunkts im Arbeitsraum, zu dem die Lastaufnahmevorrichtung hinbewegt werden soll;
- Bestimmung eines Lastmesswertes durch Messen des Gewichts der an der Lastaufnahmevorrichtung aufgenommenen Last mittels einer Lastmesseinrichtung der Lastentransporteinrichtung;
- Bestimmen der Ist-Seillängen der Positionierseile;
- Ermitteln der von der jeweiligen Positionierseilwinde durch Auf- oder Abwickeln einzustellenden Soll-Seillängen der Positionierseile für die aktuell einzustellenden Zielkoordinaten des Zielpunkts und den aktuellen Lastmesswert;
- Anpassung der Ist-Seillängen der jeweiligen Positionierseile an die einzustellenden Soll-Seillängen der jeweiligen Positionierseile durch Ansteuern der jeweiligen Positionierseilwinde mittels einer Seillängenregelung der Regeleinrichtung und Auf- oder Abwickeln der jeweiligen Positionierseile.

Bei Lastentransporteinrichtungen der eingangs genannten Art ist der Lastenträger mittels Positionierseilen an räumlich verteilt und voneinander distanziert angeordneten Aufhängevorrichtungen aufgehängt. Durch entsprechendes Auf- und Abwickeln der Positionierseile an den jeweiligen Positionierseilwinden kann der Lastenträger in im Arbeitsraum zwischen den Aufhängevorrichtungen hin und her bewegt werden, um so an der Lastaufnahmevorrichtung und damit am Lastenträger hängende Lasten im Bereich zwischen den Aufhängevorrichtungen von einem Ort zu einem anderen Ort transportieren zu können.

Ein Beispiel für eine Lastentransporteinrichtung ist in der DE 10 2009 050 729 A1 gezeigt, die den Obenbegriff des Anspruchs 1 offenbart.

Als Lastenträger ist dort eine lasttragfähige Plattform mit einem rechteckigen Grundriss vorgesehen. An den jeweiligen Ecken dieser Plattform sind die Positionierseile befestigt. Die Lastentransporteinrichtung umfasst im Weiteren ein Computersystem mit einer Steuerungseinheit zur Ansteuerung der Positionierseilwinden.

Mittels Sensoren werden die Ist-Seillängen der Positionierseile ermittelt und einer Regeleinheit, die mit der Steuerungseinheit verbunden ist, zugeführt. Die Regeleinheit wertet die gemessenen Ist-Seillängen aus und vergleicht diese mit Soll-Werten der Seillänge der Positionierseile, wobei Abweichungen zwischen Soll- und IstWerten der Seillängen ausgeglichen werden.

Hinsichtlich des Standes der Technik wird auch auf die folgende wissenschaftliche Arbeit verwiesen:
*Dokument P1:* Etienne Picard, Elias Tahoumi, Franck Plestan, Stéphane Caro, Fabien Claveau. A new control scheme of cable-driven parallel robot balancing between sliding mode and linear feedback. The 21st IFAC World Congress (IFAC 2020), Jul 2020, Berlin, Germany.

Im Dokument P1 ist eine experimentelle Lastentransporteinrichtung zur Manipulation von Stahlplatten unterschiedlicher Gestalt und Masse offenbart, bei der ein Verfahren der eingangs genannten Art realisiert ist. Die Lastentransporteinrichtung umfasst an den Seilverankerungspunkten einer Plattform angeordnete Seilkraftsensoren zur Bestimmung des Gewichts der an der Lastaufnahmevorrichtung aufgenommenen Stahlplatte. Die wissenschaftliche Arbeit untersucht die Dynamik beim Abfahren einer vorgegebenen Trajektorie des Lastenträgers, wobei in unterschiedlichen Steuerungskonzepten rechenintensive Echtzeitberechnungen der einzustellenden Soll-Seillängen der Positionierseile erfolgen. Der Hauptfokus der in dieser Schrift gezeigten Ansätze liegt in der Ermittlung der Dynamik und Wiederholgenauigkeit des Abfahrens der Trajektorie mit der Lastaufnahmevorrichtung bei unterschiedlichen Gewichten. In der Regeleinrichtung ist ein vereinfachtes Seilmodell hinterlegt, das die Positionierseile als gerade Seilabschnitte berechnet und ein unelastisches Verhalten der Positionierseile berücksichtigt.

Die Ermittlung von gültigen Lösungen für die einzustellenden Soll-Seillängen der Positionierseile ist aufgrund von zu berücksichtigenden Geometriebedingungen bzw. der Kinematik der Lastentransporteinrichtung aufwendig, da aufgrund der in der Regel vorhandenen Überbestimmung des statischen Systems mehrere Lösungen für die einzustellenden Soll-Seillängen ermittelt werden, die dann in Echtzeit mittels der Regeleinrichtung auf eine plausible Lösung reduziert werden müssen.

Aufgabe der Erfindung ist es, ein verbessertes Verfahren der eingangs genannten Art bereitzustellen, bei dem der Rechenaufwand in der Regeleinrichtung reduziert ist und eine zuverlässige Ermittlung der einzustellenden Soll-Seillängen erfolgt.

Erfindungsgemäß gelingt dies durch ein Verfahren mit den Merkmalen des Anspruch 1.

Beim Verfahren gemäß der Erfindung ist vorgesehen, dass die Regeleinrichtung eine Datenbasis aufweist, in der eine Vielzahl von Datensätzen abgespeichert ist, wobei in jedem Datensatz für vorgegebene Zielkoordinaten eines vorgegebenen Zielpunkts und einen vorgegebenen Lastwert für jeweils eines der Positionierseile eine vorab berechnete Soll-Seillänge abgelegt ist, und die von der jeweiligen Positionierseilwinde einzustellenden Soll-Seillängen der Positionierseile von der Regeleinrichtung mittels einer Abfrage in der Datenbasis ermittelt werden, indem von der Regeleinrichtung für jedes der Positionierseile zumindest ein zu den aktuell einzustellenden Zielkoordinaten des Zielpunkts und dem aktuellen Lastmesswert passender Datensatz in der Datenbasis gesucht wird und die einzustellende Soll-Seillänge des jeweiligen Positionierseils auf der Basis der vorab berechneten Soll-Seillänge des zumindest einen passenden Datensatzes bestimmt wird.

Die Grundidee der Erfindung liegt somit darin, die Soll-Seillängen der Positionierseile für eine Vielzahl von vorgegebenen, insbesondere angenommenen, Zielpunkten und vorgegebenen, insbesondere angenommenen, Lastwerten vorab zu berechnen und diese vorab berechneten Soll-Seillängen zusammen mit den zugehörigen Zielkoordinaten und den zugehörigen Lastwerten in einer Datenbasis der Regeleinrichtung als Datensätze abzuspeichern. In anderen Worten werden die Ergebnisse einer Vielzahl von Zielpunkt- und Lastwert-Szenarien für den Betrieb der Lastentransporteinrichtung, ausgedrückt durch die entsprechenden vorab berechneten Soll-Seillängen, in der Datenbasis der Regeleinrichtung hinterlegt. Die durch Auf- und Abwickeln einzustellenden Soll-Seillängen der Positionierseile werden von der Regeleinrichtung mittels einer Abfrage in der Datenbasis, d.h. durch ein Nachschlagen in Werten von bereits vorab berechneten Soll-Seillängen, ermittelt.

Durch das erfindungsgemäße Verfahren kann auf eine rechenintensive Echtzeit-Berechnung der einzustellenden Soll-Seillängen der Positionierseile in der Regeleinrichtung verzichtet werden. Da die Datenbasis für einen Satz von vorgegebenen Zielkoordinaten eines vorgegebenen Zielpunktes und einen vorgegebenen Lastwert für jedes der Positionierseile genau einen Datensatz mit genau einer vorab berechneten Soll-Seillänge enthält, können die einzustellenden Soll-Seillängen der Positionierseile durch das erfindungsgemäße Verfahren auf einfache, rasche und zuverlässige Art und Weise ermittelt werden. Insbesondere kann durch das erfindungsgemäße Verfahren auf die Hinterlegung von Randbedingungen, Gütekriterien, Plausibilitätskontrollen etc. in der Regeleinrichtung verzichtet werden, sodass diese weniger aufwendig und mit weniger Rechenleistung ausgestaltet sein kann.

Durch das Regeln der Bewegung der Last nach dem erfindungsgemäßen Verfahren ist es auf einfache Art und Weise möglich, auf veränderte Lastmesswerte zu reagieren. Insbesondere beim Aufnehmen der Last vom Untergrund steigen die Seilkräfte in den Positionierseilen bis zum Anheben der Last über den Untergrund rasch an, sodass, in Abhängigkeit von der Position der Last im Arbeitsraum, veränderte Aufteilungen der einzustellenden Sollseillängen der Positionierseile einzustellen sind, um ein Verschwenken oder Aufschaukeln der Last im Moment des vollständigen Abhebens der Last vom Untergrund zu verhindern. Im Weiteren kann in Anwendungsfällen, bei denen mittels der Lastaufnahmevorrichtung Schüttgut transportiert wird, z.B. wenn die Lastaufnahmevorrichtung einen in Form eines Zweischalengreifers ausgebildeten Schüttgutgreifer umfasst, auf Laständerungen beim Laden und insbesondere beim Entladen des Schüttguts durch eine fortlaufende Anpassung der Ist-Seillängen an die einzustellenden Soll-Seillängen der Positionierseile reagiert und somit ein Aufschaukeln der Lastaufnahmevorrichtung verhindert werden. Dadurch kann sichergestellt werden, dass die Last, insbesondere das Schüttgut, am Bestimmungsort von der Lastaufnahmevorrichtung aufgeladen oder entladen werden kann. Auch können mit dem erfindungsgemäßen Verfahren etwaige Hindernisse und/oder die Topographie des Untergrunds bei der Seillängenregelung berücksichtigt werden.

Mit dem Begriff der vorgegebenen Zielkoordinaten vorgebebener Zielpunkte sind die Koordinaten diskreter, angenommener Punkte im Arbeitsraum gemeint. Diese Punkte können z.B. durch einen Algorithmus durch eine, in ihrer Granularität bzw. Schrittweite vorgebbaren, Aufteilung des Raumes in diskrete Abschnitte ermittelt werden. Unter dem Begriff der vorgegebenen Lastwerte sind Lastwerte gemeint, die zwischen einem niedrigsten Wert, z.B. mit keiner Last (= 0 Kilogramm), bis zu einem Höchstwert der Last variiert sind. Die Schrittweiten zwischen dem niedrigsten Wert und dem Höchstwert sind je nach den konkreten Anforderungen an die Lastentransporteinrichtung vorgebbar und in der Datenbasis entsprechend hinterlegt.

Der Arbeitsraum ist der Raum zwischen den Aufhängevorrichtungen, in dem die an der Lastaufnahmevorrichtung befestigte bzw. von der Lastaufnahmevorrichtung aufgenommene Last von der Lastentransporteinrichtung von einem Ort zu einem anderen Ort transportiert werden kann. D.h., die in der Datenbasis abgelegten Zielkoordinaten vorgegebener Zielpunkte beschreiben von der Lastaufnahmevorrichtung anfahrbare Orte im Arbeitsraum.

Der Begriff des Seiles ist allgemein aufzufassen. Es handelt sich dabei um ein längliches flexibles, insbesondere biegeschlaffes, Element, das auf Zug belastbar und auf eine Winde aufwickelbar ist. Es kann sich bei dem Seil jeweils um ein Seil im engeren Sinn, z.B. ein Stahlseil, aber auch um ein Band oder eine Kette oder dergleichen handeln. All dies wird der sprachlichen Vereinfachung halber unter dem Begriff des Seiles subsummiert. Dies gilt sowohl für die Positionierseile als auch für weitere Seile der Lastentransporteinrichtung, z.B. das weiter unten noch genannte Hubseil.

Das jeweilige Seil kann als einzelnes Seil ausgeführt sein. Entsprechend wird hier für das Seil auch im Wesentlichen der Singular verwendet. Natürlich kann das jeweilige, der sprachlichen Vereinfachung wegen im Singular bezeichnete, Seil aber auch durch mehrere, insbesondere parallel zueinander verlaufende Seile oder ein Seilpaket oder ein nach Art eines Flaschenzugs eingeschertes Seils, realisiert werden.

Der Lastenträger ist das Teil, an dem die Positionierseile jeweils mit ihrem von der jeweiligen Aufhängevorrichtung abgewandten Ende angreifen. Der Lastenträger hängt somit mittels der Positionierseile an den Aufhängevorrichtungen. Durch Betätigen der Positionierseilwinden, also in anderen Worten durch entsprechendes Auf- oder Abwickeln des jeweiligen Positionierseils auf die bzw. von der jeweiligen Positionierseilwinde, kann der Lastenträger im oder über dem Arbeitsraum verfahren werden. Hierbei ist klar, dass es meist notwendig ist, alle Positionierseile auf- oder abzuwickeln, um den Lastenträger zu bewegen.

Die Lastaufnahmevorrichtung ist das Teil der Lastentransporteinrichtung, welches der Befestigung der Last am Lastenträger dient. Es kann sich z.B. um einen Haken oder einen mechanischen oder magnetischen Greifer, eine Schaufel, einen Schürfkübel, einen Schüttgutgreifer, z.B. einen Zwei- oder Mehrschalengreifer, oder dergleichen handeln, je nachdem welche Art von Last mittels der Lastentransporteinrichtung transportiert werden soll. Es könnten praktisch alle beim Stand der Technik bekannten und für das jeweilige Einsatzfeld geeigneten Lastaufnahmevorrichtungen für die Realisierung der Erfindung verwendet werden.

Die Lastentransporteinrichtung könnte auch als Seilroboter bezeichnet werden.

Die Lastentransporteinrichtung weist zumindest drei Positionierseile und entsprechend auch zumindest drei voneinander distanziert angeordnete Aufhängevorrichtungen auf. In anderen Ausführungsvarianten ist es auch möglich, dass die Lastentransporteinrichtung mehr als drei Positionierseile, also z.B. vier, fünf oder sechs Positionierseile oder mehr und eine entsprechende Anzahl von Aufhängevorrichtungen aufweist. Die Aufhängevorrichtungen werden, günstigerweise aber nicht zwingend, möglichst gleichmäßig voneinander distanziert aufgestellt, z.B. so, dass sie in einer Draufsicht jeweils in den Ecken eines in sich geschlossenen Polygonzuges angeordnet sind.

Die Aufhängevorrichtungen sind die Vorrichtungen, an denen zumindest jeweils eines der Positionierseile aufgehängt ist. Zur Ausbildung der Aufhängevorrichtungen können in dem jeweiligen Gelände bzw. in dem jeweiligen Bereich, in dem die Lastentransporteinrichtung arbeiten soll, bereits vorhandene Aufhängemöglichkeiten genutzt werden. Dies können z.B. bei Gebäuden bereits bestehende Wände oder im Fall einer natürlichen Topografie Felswände, Felsnasen oder andere, vorzugsweise gegenüber der Umgebung erhöht angeordnete, Punkte sein. Es kann aber auch vorgesehen sein, dass zumindest eine der, vorzugsweise alle, Aufhängevorrichtungen zumindest einen Mast oder Turm aufweist bzw. aufweisen, wobei auf dem Mast oder Turm die Positionierseilwinde und/oder eine Ablenkrolle für das, an der jeweiligen Aufhängevorrichtung hängende Positionierseil angeordnet ist. Es ist dabei möglich, die Positionierseilwinde an einem erhöhten oder auch dem höchsten Punkt des Mastes oder Turmes anzuordnen. In diesem Fall kann dann gegebenenfalls auf Ablenkrollen für das jeweilige Positionierseil an der jeweiligen Aufhängevorrichtung verzichtet werden. Es ist aber auch möglich, die Positionierseilwinde weiter unten, insbesondere an der jeweiligen Aufhängevorrichtung, anzuordnen. Dann ist es in der Regel günstig, wenn das Positionierseil über eine Ablenkrolle der Aufhängevorrichtung geführt wird, welche über der Positionierseilwinde an der jeweiligen Aufhängevorrichtung angeordnet ist.

Der Begriff der Regeleinrichtung ist weit zu fassen und umfasst hinsichtlich der Hardware z.B. speicherprogrammierbare Steuerungen oder Industrierechner, die auch als Industrie-PC bezeichnet werden, oder auch andere Rechner und Kombinationen davon. Der Begriff des Regelns der Bewegung der Last kann Regelvorgänge umfassen, wie z.B. das Regeln der Seillängen der Positionierseile bei einer Abweichung der Ist-Seillänge von der Soll-Seillänge. Andererseits kann die Regeleinrichtung auch Steuerungsvorgänge vornehmen, wie z.B. die direkte Ansteuerung der Positionierseilwinden oder andere Aktoren der Lastentransporteinrichtung. All diese Vorgänge, egal ob es sich im engeren Sinn um eine Steuerung oder um eine Regelung handelt, werden in dieser Schrift mittels der Regeleinrichtung der Lastentransporteinrichtung durchgeführt.

Die Erfassung von aktuell einzustellenden Zielkoordinaten eines Zielpunkts im Arbeitsraum, zu dem die Lastaufnahmevorrichtung hin bewegt werden soll, kann z.B. durch direkte Eingabe von gewünschten Zielkoordinaten erfolgen, z.B. mittels einer Eingabeeinrichtung, wie z.B. mittels einer Tastatur.

In einer bevorzugten Ausführungsform ist vorgesehen, dass die aktuell einzustellenden Zielkoordinaten mittels einer Zielkoordinatenumrecheneinheit der Regeleinrichtung aus einem, von einer Bewegungsvorgabeeinrichtung der Lastentransporteinrichtung ausgegebenen, Vorgabe-Geschwindigkeitsvektor berechnet werden. Beispielsweise kann die Bewegungsvorgabeeinrichtung ein Eingabegerät, insbesondere ein Joystick o.ä. sein. Der vom Eingabegerät ausgegebene Vorgabe-Geschwindigkeitsvektor wird dann in der Zielkoordinatenumrecheneinheit in die aktuell einzustellenden Zielkoordinaten umgerechnet. Die Durchführung von Umrechnungen aus Vorgabe-Geschwindigkeitsvektoren in Zielkoordinaten ist grundsätzlich bekannt. Zusätzlich oder alternativ zur Eingabe mittels eines Eingabegeräts ist es auch denkbar und möglich, dass die Bewegungsvorgabeeinrichtung oder eine zusätzliche Bewegungsvorgabeeinrichtung eine Bahnplanungsschnittstelle zur Vorabberechnung der gewünschten Trajektorien, d.h. des Bahnverlaufs der Lastaufnahmevorrichtung bzw. der Last, ist. Derartige Bahnplanungsschnittstellen sind grundsätzlich bekannt. Beispielsweise kann die Bahnplanungsschnittstelle mit Planungsdaten, die abzuarbeitende Zielpunkte und/oder Arbeitsaufträge der Lastentransporteinrichtung enthalten, gespeist werden.

Die Bestimmung des Lastmesswertes durch Messen des Gewichts der an der Lastaufnahmevorrichtung aufgenommenen Last kann direkt mit einer an der Lastaufnahmevorrichtung angeordneten Lastmesseinrichtung, die den Lastmesswert an die Regeleinrichtung ausgibt, erfolgen. Derartige Lastmesseinrichtungen sind, z.B. in Form von Lastmessdosen und/oder Lastmessbolzen u.ä., hinlänglich bekannt. Die Messung des Gewichts kann alternativ indirekt erfolgen, z.B. indem von der Lastmesseinrichtung die Seilkräfte in den Positionierseilen gemessen werden. Auch derartige Einrichtungen sind im Stand der Technik bekannt.

Mit den Begriffen Ist-Seillänge und Soll-Seillänge des jeweiligen Positionierseils ist ein Längenwert des jeweiligen Positionierseils gemeint, der zur Bestimmung der Ist-Position bzw. Soll-Position des Lastenträgers und der Lastaufnahmevorrichtung herangezogen wird. Es kann sich dabei um die von der jeweiligen Positionierseilwinde abgewickelte Länge des jeweiligen Positionierseils bis zu einem Verankerungspunkt am Lastenträger handeln oder, falls die jeweilige Positionierseilwinde in einem unteren Bereich der Aufhängevorrichtung angeordnet ist und das jeweilige Positionierseil über die erwähnte Ablenkrolle geführt wird, um die Länge des jeweiligen Positionierseils zwischen der Ablenkrolle und dem Verankerungspunkt am Lastenträger.

Die Bestimmung der Ist-Seillänge des jeweiligen Positionierseiles kann z.B. durch einen direkt an der Positionierseilwinde angeordneten Absolutwertgeber oder durch einen Absolutwertgeber erfolgen, der an einem die Positionierseilwinde antreibenden Positionierseilwindenantrieb angeordnet ist. Der Absolutwertgeber kann z.B. ein Absolutwert-Drehgeber sein. Durch Erfassen der Anzahl der Umdrehungen der Positionierseilwinde kann auf die Länge des von der Positionierseilwinde abgewickelten Abschnitts oder auf die Länge des sich zwischen der Ablenkrolle und dem Lastenträger erstreckenden Abschnitt des jeweiligen Positionierseils zurückgerechnet werden.

Die in der Datenbasis abgelegten Datensätze können z.B. in Form einer Datei abgelegt werden. Andererseits könnten die Datensätze in Form einer Tabelle nach Art einer relationalen Datenbank vorliegen. D.h., bei der Datenbasis kann es sich allgemein um eine Datenbank handeln. Im Weiteren ist es denkbar und möglich, dass die in der Datenbasis abgespeicherten Datensätze indexiert abgelegt sind, z.B. mittels einer sogenannten Hashtabelle oder Streuwerttabelle, um die Auffindbarkeit von abzufragenden Datensätzen in der großen Datenmenge zu erleichtern oder zu beschleunigen.

Wie bereits ausgeführt, bezieht sich ein jeweiliger der Datensätze auf jeweils eines der Positionierseile, wobei für eine vorgegebene Zielkoordinate eines vorgegebenen Zielpunkts und einen vorgegebenen Lastwert die vorab berechnete Soll-Seillänge abgelegt ist. Die Regeleinrichtung sucht für die aktuell einzustellenden Zielkoordinaten des Zielpunkts und den aktuellen Lastmesswert zumindest einen passenden Datensatz in der Datenbasis. Soweit die Ist-Seillänge eines der Positionierseile von der einzustellenden Soll-Seillänge des Positionierseils abweicht, erfolgt die Ansteuerung der jeweiligen Positionierseilwinde mittels der Seillängenregelung.

Es könnte beispielsweise vorgesehen sein, dass genau ein passender nächstliegender Datensatz in der Datenbasis gesucht wird, z.B. der hinsichtlich der vorgegebenen Zielkoordinaten nächstliegende Datensatz mit dem nächstliegenden vorgegebenen Lastwert, wobei dann die vorab berechnete Soll-Seillänge dieses Datensatzes direkt als einzustellende Soll-Seillänge des jeweiligen Positionierseils herangezogen wird.

Besonders bevorzugt ist es, wenn von der Regeleinrichtung für jedes der Positionierseile zumindest zwei zu den aktuell einzustellenden Zielkoordinaten des Zielpunkts und dem aktuellen Lastmesswert nächstliegenden Datensätze in der Datenbasis gesucht werden und die einzustellende Soll-Seillänge des jeweiligen Positionierseils auf Basis der vorab berechneten Soll-Seillängen der zumindest zwei nächstliegende Datensätze durch Interpolation bestimmt wird. Durch die Interpolation kann die einzustellende Soll-Seillänge des jeweiligen Positionierseils näherungsweise aus den diskreten, in den Datensätzen abgelegten, vorab berechneten Soll-Seillängen ermittelt werden. Dadurch kann die Positioniergenauigkeit der Lastaufnahmevorrichtung bzw. der Last erhöht werden.

Bei der Interpolation kann es sich in einem einfachen Fall um eine lineare Interpolation auf Basis der zwei nächstliegenden passenden Datensätze handeln. Es ist aber auch denkbar und möglich, dass eine trilineare Interpolation, d.h. im dreidimensionalen Raum, oder eine Interpolation im vierdimensionalen Raum, durchgeführt wird. Derartige Interpolationsverfahren sind in vielfältiger Art und Weise bekannt. Grundsätzlich sind abgesehen von linearen Interpolationsverfahren im ein- bis mehrdimensionalen Raum auch weitere, z.B. polynome, Interpolationsverfahren denkbar und möglich, wie dies hinlänglich bekannt ist.

Bevorzugt ist vorgesehen, dass die Seillängenregelung eine Vorsteuerung der einzustellenden Soll-Seillänge der Positionierseile aufweist. Durch Vorsehen einer Vorsteuerung kann das Führungsverhalten der Seillängenregelung verbessert werden.

Vorzugsweise ist vorgesehen, dass die Vorabberechnung der vorab berechneten Soll-Seillängen der Positionierseile in einem Datenaufbereitungsschritt des Verfahrens in einer von der Regeleinrichtung separierten Datenaufbereitungseinrichtung der Lastentransporteinrichtung durchgeführt wird, wobei in der Datenaufbereitungseinrichtung ein Modell der indirekten Kinematik der Lastentransporteinrichtung und ein Optimierer hinterlegt werden, und dem Optimierer das Modell der indirekten Kinematik und die vorgegebenen Lastwerte sowie die vorgegebenen Zielkoordinaten der vorgegebenen Zielpunkte zugeführt werden, und vom Optimierer mittels des Modells der indirekten Kinematik für die vorgegebenen Lastwerte an den vorgegebenen Zielkoordinaten gültige Lösungen für die Soll-Seillängen der Positionierseile ermittelt werden, und die gültigen Lösungen als die vorab berechneten Soll-Seillängen der Positionierseile zusammen mit dem jeweils zugehörigen Lastwert und den jeweils zugehörigen vorgegebenen Zielkoordinaten von der Datenaufbereitungseinrichtung in der Datenbasis der Regeleinrichtung als einer der Datensätze abgelegt werden.

Die Ablage der gültigen Lösungen in der Datenbasis der Regeleinrichtung als Datensatz kann einmalig, z.B. bei der Erstinbetriebnahme der Lastentransporteinrichtung erfolgen. D.h., es ist möglich, dass eine Datenverbindung zwischen der Datenaufbereitungseinrichtung und der Regeleinrichtung der Lastentransporteinrichtung nach der Ablage der Datensätze in der Datenbasis zumindest zeitweise getrennt ist. Bei der Erstinbetriebnahme sind die grundlegenden Kennwerte der Lastentransporteinrichtung im Modell der indirekten Kinematik zu hinterlegen. Bei einer Änderung wesentlicher Kennwerte der Lastentransporteinrichtung, z.B. in Folge von Veränderungen der Position oder Ausrichtung der Aufhängevorrichtungen oder einer Veränderung der Eigengewichte etc. können neue Datensätze mit vorab berechneten Soll-Seillängen auf Basis der Änderungen im Modell der indirekten Kinematik bzw. der geänderten Kennwerte der Lastentransporteinrichtung berechnet und diese als Ersatz für die bereits vorliegenden Datensätze in der Datenbasis der Regeleinrichtung abgelegt werden.

Modelle der indirekten Kinematik sind im Bereich der Robotik bekannt. Im vorliegenden Fall von Lastentransporteinrichtungen bildet das Modell der indirekten Kinematik das Rechengerüst, das die physikalischen Zusammenhänge von mehreren an einem Lastenträger angreifenden Positionierseilen enthält, die insbesondere bei einer Vielzahl von an einem Lastenträger angreifenden Positionierseilen, zu Überbestimmungen führen. Insbesondere bildet das Modell der indirekten Kinematik, das auch als Modell der inversen Kinematik bezeichnet werden kann, die Abhängigkeit der Soll-Seillängen der Positionierseile untereinander und in Bezug auf die vorgegebenen Zielkoordinaten der vorgegebenen Zielpunkte und die vorgegebenen Lastwerte ab.

Unter dem Begriff des Optimierers wird eine Einheit zur numerischen Lösung des Modells der indirekten Kinematik verstanden. Optimierer sind in der Mathematik in unterschiedlicher Art und Weise bekannt. Die vorgegebenen Zielpunkte, für die mittels des Optimierers gültigen Lösungen für die Soll-Seillängen der Positionierseile bei den vorgegebenen Lastwerten ermittelt werden, sind diskrete Zielpunkte der Lastentransporteinrichtung im Arbeitsraum, die im Betrieb der Lastentransporteinrichtung von der Lastaufnahmevorrichtung, unter Berücksichtigung des Gewichts der an der Lastaufnahmevorrichtung angehängten Last, angefahren werden können.

In einer bevorzugten Ausführungsform des Verfahrens ist vorgesehen, dass im Datenaufbereitungsschritt das spezifische Seilgewicht des jeweiligen Positionierseils bei der Berechnung der vorab berechneten Soll-Seillängen der Positionierseile im Modell der indirekten Kinematik berücksichtigt wird. Durch die Berücksichtigung des spezifischen Seilgewichts in der Datenaufbereitungseinrichtung wird der Einfluss des Durchhangs des jeweiligen Positionierseils aufgrund des Eigengewichts des Seils bei der Ermittlung der vorab berechneten Soll-Seillängen zugrunde gelegt. D.h., es kann durch die Vorabberechnung der Soll-Seillängen in der Datenaufbereitungseinrichtung im Datenaufbereitungsschritt ein komplexes Modell der indirekten Kinematik der Lastentransporteinrichtung berücksichtigt werden, ohne die Rechengeschwindigkeit der Regeleinrichtung selbst zu beeinflussen, da die Ergebnisse der vorab berechneten Soll-Seillängen der Datensätze auch den Durchhang des jeweiligen Positionierseils berücksichtigen. Das Modell der indirekten Kinematik könnte bei der Berücksichtigung des spezifischen Seilgewichts des jeweiligen Positionierseils auch als Modell der erweiterten indirekten Kinematik bezeichnet werden.

Um für den jeweiligen Satz von vorgegebenen Zielkoordinaten eines vorgegebenen Zielpunkts und einen vorgegebenen Lastwert für jedes der Positionierseile genau eine Soll-Seillänge vorab zu berechnen, werden bei der Optimierung in der Regel Optimierungsbedingungen verwendet.

Besonders bevorzugt ist vorgesehen, dass dem Datenaufbereitungsschritt zumindest eine Optimierungsbedingung aus:

- kleinster Durchhang der Positionierseile;
- kleinste Seilkraft der Positionierseile;
- kleinste Summe der Seilkräfte der Positionierseile;
- höchste zulässige Seilkraft des jeweiligen Positionierseils;
- kleinste Differenz der Seilkräfte der Positionierseile;
- elastische Verformung der Aufhängevorrichtungen;

zugrunde liegt.

Beispielsweise kann durch die Berücksichtigung der Optimierungsbedingung des kleinsten Durchhangs der Positionierseile ein unzulässiges Ergebnis der indirekten Kinematik verhindert werden, bei dem ein durchhängendes Positionierseil den Untergrund berührt. Ein weiteres Beispiel einer möglichen Optimierung ist das Prinzip der minimalen Energie beim Anheben der Lastaufnahmevorrichtung. Derartige und auch andere als die genannten Optimierungsbedingungen sind im Fachgebiet der Optimierungsrechnung hinlänglich bekannt.

In einer besonders bevorzugten Ausführungsform des Verfahrens ist vorgesehen, dass im Datenaufbereitungsschritt ein Vernetzungsalgorithmus angewandt wird, der die vorgegebenen Zielkoordinaten zu einem Berechnungsnetz, insbesondere einem Polygonnetz, als Berechnungsnetz-Daten vernetzt, wobei die Berechnungsnetz-Daten Verknüpfungsdaten zur Verknüpfung von benachbarten der vorgegebenen Zielkoordinaten des vorgegebenen Zielpunkts der Lastaufnahmevorrichtung und benachbarte der vorgegebenen Lastwerte umfasst, und die Berechnungsnetz-Daten in der Datenbasis der Regeleinrichtung abgelegt werden, und die Berechnungsnetz-Daten von der Regeleinrichtung bei der Bestimmung der einzustellenden Soll-Seillänge des jeweiligen Positionierseils berücksichtigt werden. Durch das Vorsehen eines Berechnungsnetzes können genauere Ergebnisse von einzustellenden Soll-Seillängen der Positionierseile im Arbeitsraum unter Berücksichtigung vorgegebener Lastwerte ermittelt werden. Beim Polygonnetz kann es sich z.B. um ein Tetraedernetz handeln.

Besonders bevorzugt ist vorgesehen, dass der Datenaufbereitungsschritt einen Iterationsalgorithmus zur Verdichtung des Berechnungsnetzes in Randbereichen des Arbeitsraumes umfasst, wobei für Zusatzkoordinaten von Zusatzpositionen der Lastaufnahmevorrichtung vorab berechnete Soll-Seillängen der Positionierseile ermittelt werden. Durch eine Verdichtung des Berechnungsnetzes kann die Anzahl der Zielpunkte in den Randbereichen des Arbeitsraums erhöht werden, um den Arbeitsraum im Randbereich zu vergrößern und die Genauigkeit der Ermittlung der einzustellenden Soll-Seillängen zu erhöhen. Derartige Algorithmen sind z.B. aus dem Bereich der Finite-Elemente-Methode bekannt.

Besonders bevorzugt ist es, wenn der Iterationsalgorithmus zur Verdichtung des Berechnungsnetzes eine Delaunay-Triangulierung ist.

Vorzugsweise ist vorgesehen, dass das Verfahren einen Schritt des Erfassens von Design-Parametern zur Berechnung der vorab berechneten Soll-Seillängen der Positionierseile im Datenaufbereitungsschritt umfasst, wobei die Design-Parameter zumindest einen der folgenden Kennwerte umfassen:

- die Position von Seilablaufpunkten der Aufhängevorrichtungen, an denen das jeweilige Positionierseil von der jeweiligen Aufhängevorrichtung in eine Richtung hin zum Lastenträger abläuft;
- die Positionen der Positionierseilwinden;
- die spezifische Seildehnung des jeweiligen Positionierseils;
- die Steifigkeit der jeweiligen Aufhängevorrichtung; das Eigengewicht des Lastenträgers;
- das Eigengewicht der Lastaufnahmevorrichtung; den Massenschwerpunkt des Lastenträgers und/oder der Lastaufnahmevorrichtung.

Beispielsweise kann der Materialkennwert der spezifischen Seildehnung des jeweiligen Positionierseils hinterlegt sein. Die Steifigkeit der jeweiligen Aufhängevorrichtung beschreibt die Stützenverformung bei unterschiedlichen Lastwerten und/oder Zielkoordinaten. Beispielsweise kann die Stützenverformung ermittelt werden, indem eine Vermessung der Stützenverformung mittels einer Kalibrierlast, die an die Lastaufnahmevorrichtung angehängt wird, erfolgt. Zusätzlich können noch weitere Design-Parameter zur Berechnung der vorab berechneten Soll-Seillängen der Positionierseile in der Datenaufbereitungseinrichtung verwendet werden, z.B. Trägheiten, Reibwerte etc., die die Charakteristik der Lastentransporteinrichtung beeinflussen. Im Weiteren können die Design-Parameter Geometriedaten von Hindernissen oder verbotenen Bereichen im Arbeitsraum der Lastentransporteinrichtung sein, z.B. im Arbeitsraum angeordnete Maschinenteile, die die Freigängigkeit der Lastaufnahmevorrichtung im Arbeitsraum behindern.

Zweckmäßigerweise beziehen sich alle bislang getroffenen Angaben zu Koordinaten, z.B. die vorgegebenen Zielkoordinaten, Positionen, wie z.B. die Position der Positionierseilwinden etc. auf ein Referenzkoordinatensystem, das in Bezug auf die Lastentransporteinrichtung festgelegt ist.

Es kann vorgesehen sein, dass die Lastaufnahmevorrichtung direkt am Lastenträger fixiert ist. Beispielsweise könnte die Lastaufnahmevorrichtung an einem am Lastenträger verankerten Seil oder einer Kette mit fixer Länge, d.h. in einem festgelegten Abstand vom Lastenträger, am Lastenträger hängen. Der Lastenträger könnte auch unmittelbar am Lastenträger fixiert sein.

In einer bevorzugten Ausführungsform ist vorgesehen, dass die Lastentransporteinrichtung eine Hubseilwinde und ein Hubseil aufweist, wobei das Hubseil von der Hubseilwinde aufwickelbar und abwickelbar ist, und die Lastaufnahmevorrichtung mittels des Hubseils am Lastenträger hängt und relativ zum Lastenträger heb- und senkbar ist.

Durch das Aufhängen der Lastaufnahmevorrichtung am Lastenträger mittels des Hubseils und der damit verbundenen Möglichkeit die Lastaufnahmevorrichtung mittels des Hubseils relativ zum Lastenträger zu heben und von diesem abzusenken, wird der Arbeitsraum der Lastentransporteinrichtung gegenüber anderen Ausführungen von Lastentransporteinrichtungen, insbesondere im Randbereich des Arbeitsraums, deutlich vergrößert. Die Hubseilwinde kann z.B. am Lastenträger angeordnet sein, wobei hierzu vorgesehen sein kann, dass eine elektrische Energieversorgungsleitung zur Versorgung eines Antriebsmotors der Hubseilwinde mit elektrischer Energie in zumindest eines der Positionierseile integriert ist. Genauso gut ist es möglich, dass diese Energieversorgungsleitung als separate Leitung zur Hubseilwinde geführt ist. Die elektrische Versorgung der Hubseilwinde kann auch mittels eines Akkumulators erfolgen, der außerhalb der Betriebszeiten aufgeladen oder ausgetauscht wird.

Alternativ ist es denkbar und möglich, dass die Hubseilwinde an einer der Aufhängevorrichtungen angeordnet ist. der Lastenträger kann dann eine Ablenkrolle aufweisen, wobei das Hubseil von der Hubseilwinde über die Ablenkrolle zur Lastaufnahmevorrichtung geführt ist.

Ist ein Hubseil vorhanden, so umfasst das Verfahren bevorzugterweise zusätzlich die folgenden Schritte: Bestimmen der Ist-Seillänge des Hubseils; Ermitteln der von der Hubseilwinde durch Auf- oder Abwickeln einzustellenden Soll-Seillänge des Hubseils für die aktuell einzustellenden Zielkoordinaten und den aktuellen Lastmesswert, wobei in jedem Datensatz für die vorgegebenen Zielkoordinaten eines jeweiligen der vorgegebenen Zielpunkte und für jeweilige der vorgegebenen Lastwerte für das Hubseil eine vorab berechnete Soll-Seillänge des Hubseils abgelegt ist, und die von der Hubseilwinde durch Auf- oder Abwickeln einzustellenden Soll-Seillänge des Hubseils von der Regeleinrichtung mittels einer Abfrage in der Datenbasis ermittelt wird, in dem von der Regeleinrichtung für das Hubseil zumindest ein zu den aktuell einzustellenden Zielkoordinaten des Zielpunkts und dem aktuellen Lastmesswert passender Datensatz in der Datenbasis gesucht wird und die einzustellende Soll-Seillänge des Hubseils auf Basis der vorab berechneten Soll-Seillänge des zumindest einen passenden Datensatzes bestimmt wird, Anpassung der Ist-Seillänge des Hubseils an die einzustellende Soll-Seillänge des Hubseils durch Ansteuern der Hubseilwinde mittels der Seillängenregelung der Regeleinrichtung und Auf- oder Abwickeln des Hubseils. D.h., ein gegebenenfalls vorhandenes Hubseil der Lastentransporteinrichtung kann analog zu den Positionierseilen behandelt werden, wobei alle Verfahrensschritte bezüglich der Positionierseile analog auch für das Hubseil oder weitere Seile durchgeführt werden können.

Weitere Merkmale und Einzelheiten des erfindungsgemäßen Verfahrens und deren Anwendung bei einer Lastentransporteinrichtung werden beispielhaft in der nachfolgenden Figurenbeschreibung erläutert. Es zeigen:

Fig. 1       eine vereinfachte Gesamtansicht einer Lastentransporteinrichtung inkl. eines schematisierten Arbeitsraums in einer isometrischen Darstellung;

Fig. 2       eine isometrische Darstellung einer Lastentransporteinrichtung mit drei vergrößerten Detailansichten A bis C;

Fig. 3       die Lastentransporteinrichtung gemäß Fig. 2 beim Aufnehmen einer Last;

Fig. 4       die Lastentransporteinrichtung gemäß Fig. 2 beim Transportieren der Last im Arbeitsraum;

Fig. 5       eine schematische Darstellung der Ansteuerung der Positionierseilwinden und der Hubseilwinde der Lastentransporteinrichtung gemäß Fig. 2;

Fig. 6       eine schematische Detailansicht einer Datenaufbereitungseinrichtung und einer Regeleinrichtung der Lastentransporteinrichtung gemäß Fig. 2;

Fig. 7       eine symbolisierte Darstellung eines Optimierungsschritts zur Ermittlung von Datensätzen für eine Datenbasis der Regeleinrichtung;

Fig. 8       eine vereinfachte Darstellung eines mittels der Datenaufbereitungseinrichtung ermittelten Arbeitsraums mit gültigen Lösungen für errechnete Soll-Seillängen;

Fig. 9       eine alternative Ausführung der Regeleinrichtung nach Fig. 6 mit einer Vorsteuerung;

Fig. 10a     bis 10e Darstellungen eines auf eine zweidimensionale Ansicht vereinfachten Ablaufs des Aufnehmens einer Last von einem Untergrund mittels der Lastaufnahmevorrichtung unter Verwendung des erfindungsgemäßen Verfahrens in fünf Schritten a bis e;

Fig. 11      ein Diagramm des Verlaufs der Ist-Seillängen der Positionierseile in den fünf Schritten a bis e gemäß Fig. 10a bis 10e, und

Fig. 12      ein Diagramm des Verlaufs der Seilkräfte in den Positionierseilen in den fünf Schritten a bis e gemäß Fig. 10a bis 10e;

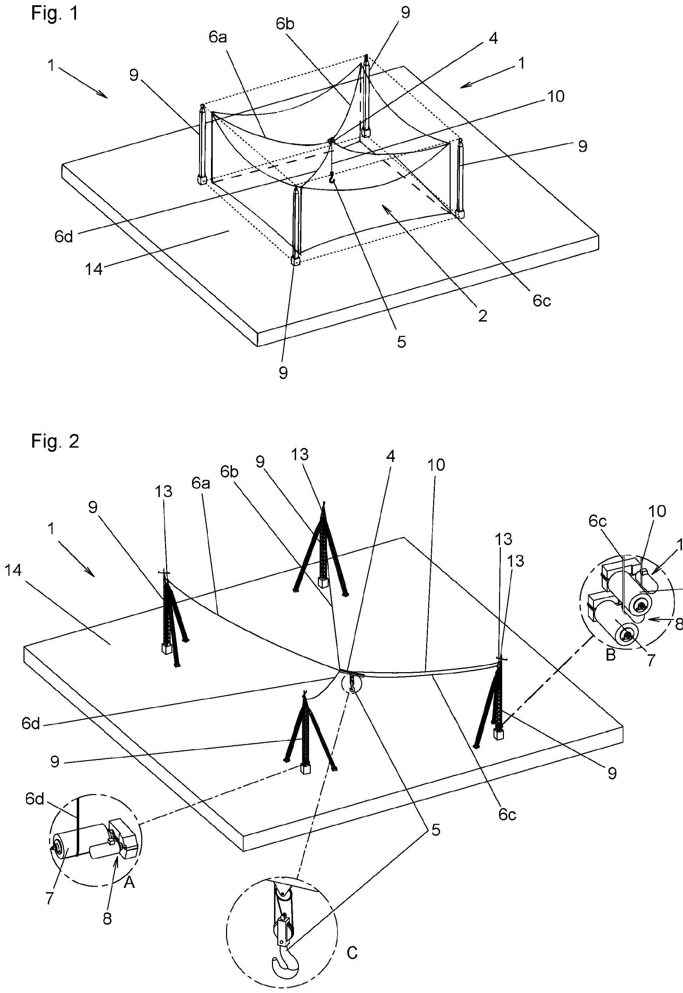

Fig. 1 zeigt in einer vereinfachten Darstellung eine Lastentransporteinrichtung 1 mit vier in Form von Masten ausgebildeten Aufhängevorrichtungen 9, an denen jeweils Positionierseile 6a, 6b, 6c, 6d hängen. Die Positionierseile 6a-d verlaufen von der jeweiligen Aufhängevorrichtung 9 zu einem Lastenträger 4, der mittels der Positionierseile 6a-d an den Aufhängevorrichtungen 9 hängt. Am Lastenträger 4 ist eine Lastaufnahmevorrichtung 5 zur Aufnahme einer Last befestigt. In der Darstellung der Fig. 1 ist diese Lastaufnahmevorrichtung 5 als Haken ausgeführt, wobei die Lastaufnahmevorrichtung 5 mittels eines Hubseils 10 der Lastentransporteinrichtung 1 am Lastenträger 4 befestigt ist und am Lastenträger 4 hängt. Die Lastaufnahmevorrichtung 5 ist in der in Fig. 1 gezeigten Ausführung relativ zum Lastenträger 4 heb- und senkbar. Durch Aufwickeln und Abwickeln der Positionierseile 6a-d auf die in Fig. 1 nicht dargestellten Positionierseilwinden 7, kann der Lastenträger 4 samt der Lastaufnahmevorrichtung 5 im Bereich zwischen den Aufhängevorrichtungen 9 bewegt werden, um Lasten 3 aufzunehmen, an einen anderen Ort zu transportieren und auf der Oberfläche des Untergrunds 14 wieder abzulegen. Durch das Vorsehen eines Hubseils 10 kann auch der randliche Bereich in der Nähe der Aufhängevorrichtungen 9 gut erreicht werden. Der in Fig. 1 vereinfacht dargestellte Arbeitsraum 2 definiert den Raum zwischen den Aufhängevorrichtungen 9, in dem die an der Lastaufnahmevorrichtung 5 befestigte bzw. von der Lastaufnahmevorrichtung 5 aufgenommene Last von der Lastentransporteinrichtung 1 von einem Ort zu einem anderen Ort transportiert werden kann. Der Arbeitsraum 2 ist im Allgemeinen kleiner als der Raum zwischen den Aufhängevorrichtungen 9, was durch einen Vergleich der durchgezogenen Linien des Arbeitsraums 2 mit dem von den Aufhängevorrichtungen 9 aufgespannten Raumes, der in Fig. 1 in gestrichelten Linien angedeutet ist, ersichtlich ist.

Das noch zu erläuternde Verfahren zum Regeln einer Bewegung der Last 3 im Arbeitsraum 2 kann, wie eingangs ausgeführt, für Lastentransporteinrichtungen 1 mit nur drei Positionierseilen und entsprechend auch nur drei Aufhängevorrichtungen, aber vor allem auch mit mehr als drei, also vier, fünf oder sechs etc. Positionierseilen und Aufhängevorrichtungen durchgeführt werden. Die Aufhängevorrichtungen stehen dabei, in einer Draufsicht auf die Oberfläche des Untergrunds 14 gesehen, günstigerweise in den Ecken eines gedachten, in sich geschlossenen Polygonzuges, der bei drei Aufhängevorrichtungen eben ein Dreieck ist. Bei den in Fig. 1 dargestellten vier Aufhängevorrichtungen 9 stehen die Aufhängevorrichtungen 9, in einer Draufsicht auf die Oberfläche des Untergrunds 14 gesehen, in einem Rechteck oder einem Quadrat, oder allgemein gesprochen in einem Viereck. Bei fünf Aufhängevorrichtungen stehen diese, in einer Draufsicht auf die Oberfläche des Untergrunds gesehen, in einem Fünfeck usw.

In Fig. 1 ist der Lastenträger 4 nur schematisch dargestellt, wobei an jedem Eckpunkt des Lastenträgers 4 jeweils eines der Positionierseile 6a bis 6d angreift. Die nicht gezeigte Hubseilwinde 11 kann auf dem Lastenträger 4 angeordnet sein oder, wie dies bei der in den Fig. 2 bis 4 gezeigten Lastentransporteinrichtung 1 realisiert ist, an einer der Aufhängevorrichtungen 9 angeordnet sein. All dies ist im Stand der Technik bekannt.

In den Fig. 2 bis 4 ist nun ein Beispiel einer Lastentransporteinrichtung 1 gezeigt, anhand welcher das erfindungsgemäße Verfahren erläutert wird. Die jeweilige Aufhängevorrichtung 9 weist zwei nicht näher bezeichnete Druckstützen und eine gewichtsbeschwerte Zugstütze auf, die auf dem Untergrund 14 aufliegt. Jede Aufhängevorrichtung 9 weist eine Positionierseilwinde 7 zum Auf- und Abwickeln jeweils eines der Positionierseile 6a-6d auf. Im gezeigten Ausführungsbeispiel sind die Positionierseilwinden 7 jeweils in einem bodennahen Bereich der Aufhängevorrichtung 9, nahe dem Untergrund 14, angeordnet.

In den jeweils mit strichpunktierten Kreisen markierten Detaildarstellungen A bis C sind Details der Lastentransporteinrichtung 1 der Fig. 2 hervorgehoben. Das Detail A zeigt beispielhaft eine der Positionierseilwinden 7, die zum Auf- und Abwickeln des Positionierseils 6d dient. Jede Positionierseilwinde 7 weist jeweils einen Positionierseilwindenantrieb 8 auf, der im Ausführungsbeispiel als Motor-Getriebeeinheit zum Antrieb der nicht näher bezeichneten Seiltrommel ausgeführt ist, vgl. auch das Detail B.

Bei der in Fig. 2 bis 4 dargestellten Lastentransporteinrichtung 1 ist das Hubseil 10 vom Lastenträger 4 zu einer der Aufhängevorrichtungen 9 geführt, wobei eine Hubseilwinde 11 zum Auf- und Abwickeln des Hubseils 10 in einem bodennahen Bereich der Aufhängevorrichtung 9 angeordnet ist, vgl. Detail B der Fig. 2. Die Hubseilwinde 11 weist einen Hubseilwindenantrieb 12 auf, der als Motor-Getriebeeinheit ausgeführt ist.

Die Lastaufnahmevorrichtung 5 ist als Haken ausgeführt, der zur Aufnahme der Last 3 dient, vgl. Detail C der Fig. 2. Das Hubseil 10 ist nach Art eines Flaschenzugs zwischen dem Haken und einer nicht näher bezeichneten Umlenkseilrolle am Lastenträger 4 eingeschert und am Haken verankert. Derartige Anordnungen von Flaschenzügen sind in vielfältiger Art und Weise bekannt. Anstatt eines Hakens kann die Lastaufnahmevorrichtung je nach Anwendungsfall auch anders ausgeführt sein, wie dies bereits eingangs erläutert ist. Für das Verfahren zum Regeln der Bewegung der Last 3 im Arbeitsraum 2 ist die Ausführung der Lastaufnahmevorrichtung 5 von untergeordneter Bedeutung.

Bei der in Fig. 2 bis 4 gezeigten Lastentransporteinrichtung 1 ist der Lastenträger 4 nach Art einer Traverse ausgebildet, wobei drei der Positionierseile 6a, 6b und 6d an einem Ende der Traverse angreifen und das Positionierseil 6c an einem gegenüberliegenden Ende der Traverse am Lastenträger 4 angreift. Das Hubseil 10 verläuft parallel zum Positionierseil 6c zur selben Aufhängevorrichtung 9.

Das jeweilige der Positionierseile 6a-d bzw. das Hubseil 10 verläuft im Bereich der Aufhängevorrichtungen 9 jeweils von der Seiltrommel im Wesentlichen in vertikaler Richtung zu einer dem Untergrund 14 gegenüberliegenden, an der Aufhängevorrichtung 9 angeordneten, Ablenkrolle 13 und von dieser jeweils zum Lastenträger 4.

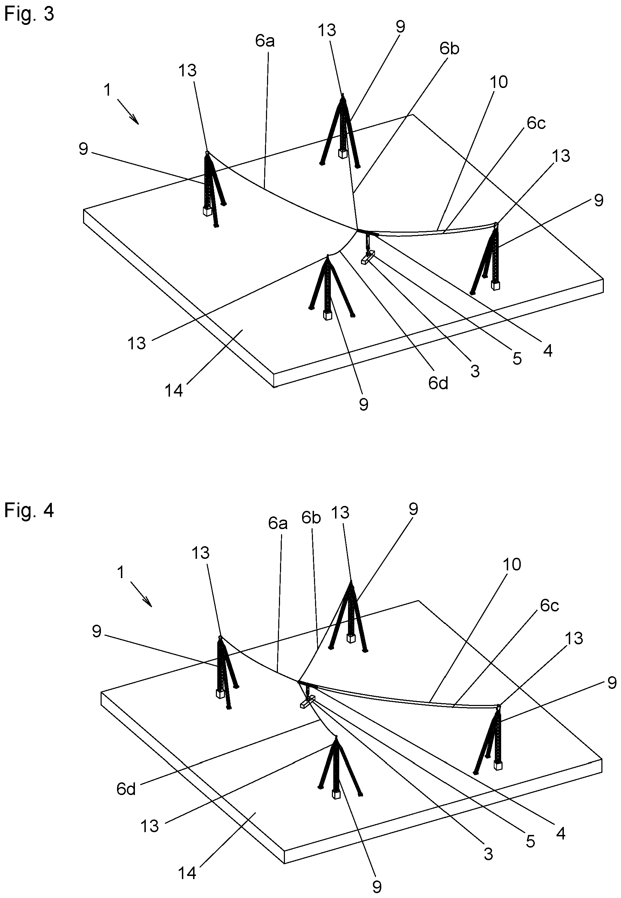

In den Fig. 3 und 4 sind nun zwei beispielhafte Positionen des Lastenträgers 4 bzw. der Lastaufnahmevorrichtung 5 und der Last 3 gezeigt. In dem in Fig. 3 dargestellten Zustand ist die von der Lastaufnahmevorrichtung 5 aufgenommene Last 3 von der Lastenaufnahmevorrichtung 5 vom Untergrund 14 abgehoben. Fig. 4 zeigt einen Zustand, bei dem die Last 3 im vom Untergrund 14 abgehobenen Zustand im Arbeitsraum 2 zu einem Bestimmungsort transportiert wird. Das Anheben der Last 3 und das transportieren der Last 3 im Arbeitsraum 2 erfolgt durch ein Auf- und Abwickeln des jeweiligen Positionierseils 6a-d auf bzw. von der Positionierseilwinde 7 und/oder durch ein Auf- und Abwickeln des Hubseils 10 auf bzw. von der Hubseilwinde 11. Aus Gründen der Übersichtlichkeit sind die Positionierseilwinden 7 und die Hubseilwinde 11 in Fig. 3 und 4 nicht dargestellt.

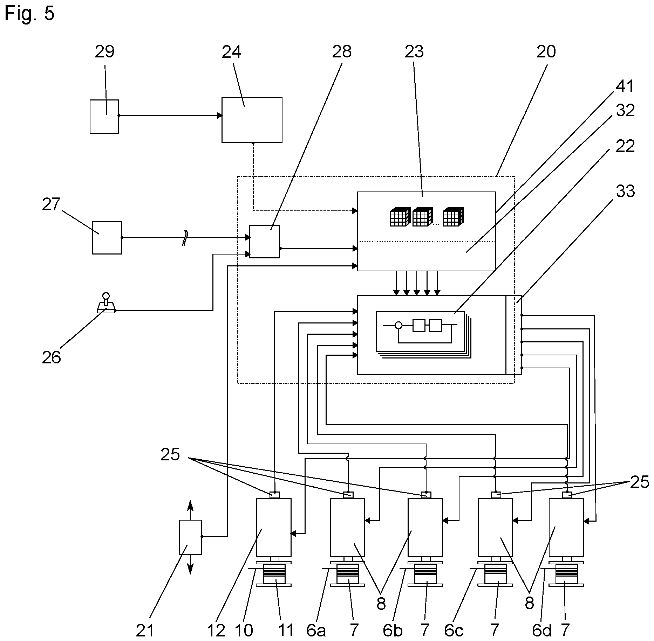

In Fig. 5 sind nun die Komponenten der Lastentransporteinrichtung 1 zur Ansteuerung der Positionierseilwinden 7 und der Hubseilwinde 11 vereinfacht dargestellt, um das erfindungsgemäße Verfahren im Detail zu erläutern. Die Positionierseilwindenantriebe 8 und der Hubseilwindenantrieb 12, sind ebenfalls vereinfacht dargestellt. Im Ausführungsbeispiel weist jeder Positionierseilwindenantrieb 8 und der Hubseilwindenantrieb 12 einen Absolutwertgeber 25 zur Erfassung der Drehstellung der Positionierseilwinden 7 bzw. der Hubseilwinde 10 auf. Mittels des Absolutwertgebers 25 kann die von der jeweiligen Positionierseilwinde 7 bzw. Hubseilwinde 10 abgewickelte Ist-Seillänge des jeweiligen Positionierseils 6a-d und des Hubseils 10 bestimmt werden.

Die Lastentransporteinrichtung 1 weist im Weiteren eine Regeleinrichtung 20 auf, die der Kontrolle und Regelung der Seillängen der Positionierseile 6a-d dient. Im Ausführungsbeispiel ist die Regeleinrichtung 20 eine Kombination aus einer Speicherprogrammierbaren Steuerung und einem Industrierechner. Auch andere Ausführungen der Regeleinrichtung 20 sind möglich, wie eingangs erwähnt wurde.

Die von den Absolutwertgebern 25 ausgegebenen Werte werden in der Regeleinrichtung 20 in einen Wert der Ist-Seillängen umgerechnet, was in den Figuren nicht gesondert dargestellt ist. Die Werte der Ist-Seillängen werden einer Seillängenregelung 22 zugeführt, die die gemessenen Ist-Seillängen mit, noch zu erläuternden, vorgegebenen Soll-Seillängen vergleicht und basierend auf diesem Vergleich eine Anpassung der Ist-Seillängen der Positionierseile 6a-d durch Auf- oder Abwickeln der Positionierseile 6a-d und der Ist-Seillänge des Hubseils 10 durch Auf- oder Abwickeln vornimmt.

Im Ausführungsbeispiel ist der Seillängenregelung 22 ein Frequenzumrichter 33 der Lastentransporteinrichtung 1 nachgeschaltet, der die Ansteuerung der Positionierseilwindenantriebe 8 und des Hubseilwindenantriebs 12 vornimmt. Die Seillängenregelung 22 könnte in einer anderen Ausführungsform Teil des Frequenzumrichters 33 sein. Derartige Ausführungsformen von Frequenzumrichtern sind hinlänglich bekannt.

Im Weiteren weist die Lastentransporteinrichtung 1 eine Lastmesseinrichtung 21 auf, die in Fig. 5 ebenfalls nur schematisch dargestellt ist. Im Ausführungsbeispiel ist die Lastmesseinrichtung 21 an der Lastaufnahmevorrichtung 5 angeordnet und ermöglicht es, das Gewicht der an der Lastaufnahmevorrichtung 5 aufgenommenen Last 3 zu messen.

Die Regeleinrichtung 20 weist eine Datenabfrageeinheit 41 auf, der der von der Lastmesseinrichtung 21 ausgegebene Lastmesswert zugeführt ist.

Im Weiteren weist die Lastentransporteinrichtung 1 zwei Bewegungsvorgabeeinrichtungen auf. Eine als Eingabeeinrichtung 26 bezeichnete Bewegungsvorgabeeinrichtung dient zur Erfassung von aktuell einzustellenden Bewegungsrichtungen der Lastaufnahmevorrichtung 5. In Fig. 5 ist die Eingabeeinrichtung 26 als Joystick eingezeichnet, der von einem Bediener der Lastentransporteinrichtung 1 zur direkten Vorgabe von Fahrbefehlen bedient werden kann. Ein von der Eingabeeinrichtung 26 ausgegebenen Vorgabe-Geschwindigkeitsvektor wird in einer Zielkoordinatenumrecheneinheit 28 der Regeleinrichtung 20 in die aktuell einzustellenden Zielkoordinaten eines Zielpunkts, zu dem die Lastaufnahmevorrichtung 5 hin bewegt werden soll, umgerechnet. Derartige Zielkoordinatenrecheneinheiten 28 sind hinlänglich bekannt.

Die weitere Bewegungsvorgabeeinrichtung der Lastentransporteinrichtung 1 ist im Ausführungsbeispiel eine Bahnplanungsschnittstelle 27, die in Fig. 5 ebenfalls nur schematisch dargestellt ist. Die von der Bahnplanungsschnittstelle 27 ausgegebenen Vorgabedaten liegen im Ausführungsbeispiel ebenfalls als Vorgabe-Geschwindigkeitsvektor vor und werden der Zielkoordinatenumrecheneinheit 28 zugeführt, die den Vorgabe-Geschwindigkeitsvektor in die aktuell einzustellenden Zielkoordinaten eines Zielpunkts, zu dem die Lastaufnahmevorrichtung 5 hin bewegt werden soll, umgerechnet. Es wäre auch denkbar und möglich, dass die Bahnplanungsschnittstelle 27 neben Geschwindigkeitsvektoren weitere Vorgabedaten vorgibt, wie z.B. Beschleunigungswerte, Ruckwerte etc. Die Zielkoordinatenumrecheneinheit 28 verwendet die von der Bahnplanungsschnittstelle 27 bereitgestellten Daten auch in diesem Fall zur Bestimmung der aktuell einzustellenden Zielkoordinaten des Zielpunkts zu dem die Lastaufnahmevorrichtung 5 hin bewegt werden soll.

Die Bahnplanungsschnittstelle 27 kann von der Regeleinrichtung 20 abgelegen angeordnet sein, was durch ein Unterbrechungssymbol in der Verbindungslinie zwischen der Bahnplanungsschnittstelle 27 und der Zielkoordinatenumrecheneinheit 28 in Fig. 5 dargestellt ist. Die Bahnplanungsschnittstelle 27 kann beispielsweise mit einer Bahnplanungssoftware eines Leitrechners verknüpft sein, der zur Planung der Arbeitsabläufe der Lastaufnahmevorrichtung 5 im Arbeitsraum 2 verwendet wird, was nicht gesondert dargestellt ist. Mit der Bahnplanungssoftware können Vorgaben hinsichtlich eines geplanten Bewegungspfades der Lastaufnahmevorrichtung und/oder des Verlaufes der Geschwindigkeit und/oder der Beschleunigung und/oder des Rucks der Lastaufnahmevorrichtung bezogen auf den Bewegungspfad getroffen werden. Derartige Leitrechner und entsprechende Bahnplanungssoftware sind hinlänglich bekannt.

Die Regeleinrichtung 20 weist eine in der Datenabfrageeinheit 41 der Regeleinrichtung 20 angeordnete Datenbasis 23 auf. In der Datenbasis 23 ist eine Vielzahl von Datensätzen abgelegt.

Jeder in der Datenbasis 23 abgelegte Datensatz enthält für jeweils eines der Positionierseile 6a-d, und im Ausführungsbeispiel auch für das Hubseil 10, für vorgegebene Zielkoordinaten eines vorgegebenen Zielpunkts und einen vorgegebenen Lastwert eine vorab berechnete Soll-Seillänge des jeweiligen Positionierseils 6a-d und des Hubseils 10.

Die vorgegebenen Zielkoordinaten beziehen sich auf ein Referenzkoordinatensystem, das in Bezug auf die Lastentransporteinrichtung 1 festgelegt ist. Mittels des Referenzkoordinatensystem sind alle Punkte im Arbeitsraum 2 eindeutig beschreibbar.

Das Verfahren zum Regeln einer Bewegung der Last 3 im Arbeitsraum 2 der Lastentransporteinrichtung 1 mittels der Regeleinrichtung 20 umfasst nun eine Abfolge von Schritten:

In einem ersten Schritt werden die aktuell einzustellenden Zielkoordinaten eines Zielpunkts im Arbeitsraum 2, zu dem die Lastaufnahmevorrichtung 5 hinbewegt werden soll, erfasst. Dieser Schritt erfolgt im Ausführungsbeispiel mittels der Zielkoordinatenumrecheneinheit 28, die die Zielkoordinaten an die Datenabfrageeinheit 41 übermittelt.

Im Weiteren wird ein Lastmesswert durch Messen des Gewichts der an der Lastaufnahmevorrichtung 5 aufgenommenen Last 3 mittels der Lastmesseinrichtung 21 bestimmt. Die Lastmesseinrichtung 21 kann direkt an der Lausaufnahmevorrichtung 5, z.B. am Haken, angeordnet sein, wie dies an sich bekannt ist. Alternativ kann die Bestimmung des Lastmesswerts indirekt durch eine an der Hubseilwinde 11 angeordnete Lastmesseinrichtung 21, z.B. mittels eines oder mehrerer Kraftmessbolzen an einer Verankerung der Hubseilwinde 11 oder durch eine Messung des erforderlichen Drehmoments der Hubseilwinde 11, erfolgen. Auch derartige Ausführungen von Lastmesseinrichtungen 21 sind hinlänglich bekannt. Optional kann die von der Hubseilwinde 11 abgewickelte Seillänge des Hubseils 11 bei der Bestimmung des Lastmesswerts berücksichtigt werden. Im Weiteren kann eine indirekte Messung des Gewichts der Last 3 mittels der Lastmesseinrichtung 21 durch eine Bestimmung der Seilkräfte in den Positionierseilen 6a-6d, vorzugsweise unter Berücksichtigung der von der jeweiligen Positionierseilwinde 7 abgewickelten Seillänge, realisiert werden. Ist die Hubseilwinde 11, wie im Ausführungsbeispiel vorgesehen, an einer der Aufhängevorrichtungen 9 angeordnet, so kann eine indirekte Messung des Gewichts der Last 3 mittels der Lastmesseinrichtung 21 durch eine Messung der Seilkräfte der Positionierseile 6a-6d und durch eine Messung der Seilkraft des Hubseils 10 unter Berücksichtigung der von der jeweiligen Positionierseilwinde 7 bzw. der von der Hubseilwinde 11 abgewickelten Seillänge erfolgen.

Die Bestimmung der aktuellen Position der Lastaufnahmevorrichtung 5 im Arbeitsraum 2 erfolgt durch die Bestimmung der Ist-Seillängen der Positionierseile 6a-d und, im Ausführungsbeispiel auch durch Bestimmung der Ist-Seillänge des Hubseils 10.

Die einzustellenden Soll-Seillängen der Positionierseile 6a-d und des Hubseils 10 werden von der Regeleinrichtung 20 mittels einer Abfrage in der Datenbasis 23 ermittelt. Hierzu wird von der Regeleinrichtung 20 für jedes der Positionierseile 6a-d und das Hubseil 10 zumindest ein zu den aktuell einzustellenden Zielkoordinaten des Zielpunkts und dem aktuellen Lastmesswert passender Datensatz in der Datenbasis 23 gesucht. Die einzustellende Soll-Seillänge des jeweiligen Positionierseils 6a-d und des Hubseils 10 wird im Weiteren auf Basis der vorab berechneten Soll-Seillänge des zumindest einen passenden Datensatzes bestimmt. Auf die Bestimmung der einzustellenden Soll-Seillänge und Möglichkeiten, die Genauigkeit der einzustellenden Soll-Seillänge zu verbessern, wird weiter unten noch eingegangen.

Im Weiteren werden die Ist-Seillängen der jeweiligen Positionierseile 6a-d an die Soll-Seillängen der jeweiligen Positionierseile 6a-d und die Ist-Seillänge des Hubseils 10 an die Soll-Seillänge des Hubseils 10 durch Ansteuern der jeweiligen Positionierseilwinde 7 bzw. der Hubseilwinde 11 mittels der Seillängenregelung 22 der Regeleinrichtung 20 angepasst.

Solange sich der Lastmesswert und die einzustellenden Zielkoordinaten nicht ändern und soweit die Ist-Seillänge des jeweiligen Positionierseils 6a-d und des Hubseils 10 von der einzustellenden Soll-Seillänge des jeweiligen Positionierseils 6a-d und des Hubseils 10 abweicht, führt die Seillängenregelung 22 die Anpassung der Ist-Seillänge an die einzustellende Soll-Seillänge des jeweiligen Positionierseils 6a-d und des Hubseils 10 durch, bis die Ist-Seillänge jedes Positionierseils 6a-d und des Hubseils mit den jeweiligen Soll-Seillängen übereinstimmen.

Ändern sich die einzustellenden Zielkoordinaten aufgrund eines geänderten Vorgabe-Geschwindigkeitsvektors und/oder aufgrund eines geänderten Lastmesswerts, z.B. infolge des Aufnehmens einer Last 3 oder durch Entladen einer Last 3, so erfolgt mittels der Datenabfrageeinheit 41 eine Abfrage neuer einzustellender Soll-Seillängen der Positionierseile 6a-d und des Hubseils 10 in der Datenbasis 23. D.h., die Seillängenregelung 22 erhält neue einzustellende Soll-Seillängen der Positionierseile 6a-d und des Hubseils 10, wobei dann die Seillängenregelung 22 die Anpassung der Ist-Seillänge an die neu einzustellende Soll-Seillänge des jeweiligen Positionierseils 6a-d und des Hubseils 10 durchführt, bis die Ist-Seillänge jedes Positionierseils 6a-d und des Hubseils 10 mit den jeweiligen einzustellenden Soll-Seillängen übereinstimmen.

Ein einfaches Beispiel für die in der Datenbasis 23 abgelegten Datensätze ist im Folgenden angeführt. Die Bezeichnung XYZG ordnet die nachfolgenden, von eckigen Klammern eingeschlossenen, Beispielwerte den vorgegebenen Zielkoordinaten X, Y und Z eines vorgegebenen Zielpunktes und G eine entsprechende Lastwertannahme, die in den Beispieldaten konstant 1 beträgt, zu. Auch die Werte der Zielkoordinaten in X- und Y-Richtung sind in den Beispieldaten aus Gründen der Einfachheit konstant 1. In den Beispieldaten ändert sich lediglich die Zielkoordinate Z zwischen den Werten 1, 2 und 3:

```
XYZG[1,1,1,1].Positionierseil[1] := 2882,0;
XYZG[1,1,1,1].Positionierseil[2] := 2594,2;
XYZG[1,1,1,1].Positionierseil[3] := 1136,5;
XYZG[1,1,1,1].Positionierseil[4] := 1906,4;
XYZG[1,1,2,1].Positionierseil[1] := 2858,9;
XYZG[1,1,2,1].Positionierseil[2] := 2548,1;
XYZG[1,1,2,1].Positionierseil[3] := 1039,8;
XYZG[1,1,2,1].Positionierseil[4] := 1847,0;
XYZG[1,1,3,1].Positionierseil[1] := 2843,5;
XYZG[1,1,3,1].Positionierseil[2] := 2503,9;
XYZG[1,1,3,1].Positionierseil[3] := 943,7;
XYZG[1,1,3,1].Positionierseil[4] := 1789,9;
```

...

Für jedes der Positionierseile, deren Zuordnung über die in der entsprechenden eckigen Klammer angeführte Nummer des jeweiligen Positionierseils erfolgt, ist die einzustellende Soll-Seillänge vorab berechnet und abgespeichert. Z.B. für das Positionierseil[1] bei den vorgegebenen Zielkoordinaten X=1, Y=1, Z=1 und den vorgegebenen Lastwert G=1 beträgt die einzustellende Soll-Seillänge = 2882,0.

Es kann nun vorgesehen sein, dass die von der jeweiligen Positionierseilwinde 7 durch Auf- oder Abwickeln einzustellenden Soll-Seillängen der Positionierseile 6a-d von der Regeleinrichtung 20 mittels einer Abfrage über die Datenabfrageeinheit 41 in der Datenbasis 23 ermittelt werden, indem von der Regeleinrichtung 20 für jedes der Positionierseile 6a-d ein zu den aktuell einzustellenden Zielkoordinaten des Zielpunkts und dem aktuellen Lastmesswert nächstliegender passender Datensatz in der Datenbasis 23 gesucht wird und die einzustellende Soll-Seillänge des jeweiligen Positionierseils 6a-d auf Basis der vorab berechneten Soll-Seillänge des einen passenden Datensatzes bestimmt wird.

Zurückkommend auf die oben angeführten Beispiele von Datensätzen würde beispielsweise bei den einzustellenden Zielkoordinaten X=1, Y=1 und Z=2,2 und G=1 für das Positionierseil[2] der nächstliegende Datensatz gesucht, und damit der Datensatz

```
XYZG[1,1,2,1].Positionierseil[2] := 2548,1;
```

aufgefunden, da dieser in Hinblick auf die Koordinate Z dem nächstliegenden Datensatz entspricht, usw. Sind die Anforderungen an die Positioniergenauigkeit der Lastaufnahmevorrichtung 5 gering, kann direkt mit dem aufgefundenen Wert der vorab berechneten Soll-Seillänge weiterverfahren werden.

Bei den in der Datenbasis abgespeicherten Werten handelt es sich somit um diskrete vorgegebene Zielkoordinaten auf deren Basis, unter Berücksichtigung der vorgegebenen Lastwerte, die einzustellenden Soll-Seillängen der Positionierseile 6a-d und auch des Hubseils 10, das in den Beispieldaten weggelassen wurde, ermittelt wird.

Im Ausführungsbeispiel weist die Datenabfrageeinheit 41 einen Interpolator 32 auf, um die Positioniergenauigkeit der Lastentransporteinrichtung 1 zu erhöhen. Beim Verfahren zum Regeln der Bewegung der Last 3 im Arbeitsraum 2 werden hierzu zumindest zwei für die aktuell einzustellenden Zielkoordinaten des Zielpunkts und dem aktuellen Lastmesswert nächstliegenden Datensätze in der Datenbasis 23 gesucht und die einzustellende Soll-Seillänge des jeweiligen Positionierseils 6a bis 6d auf Basis der vorab berechneten Soll-Seillängen der zumindest zwei nächstliegenden Datensätze durch Interpolation bestimmt. Die Interpolation kann im einfachsten Fall eine lineare Interpolation sein. Auch andere, insbesondere nichtlineare, Interpolationsverfahren sind einsetzbar, um die Positioniergenauigkeit der Lastentransporteinrichtung 1 weiter zu verbessern. Der Interpolator 32 nimmt die entsprechende Interpolation in der Datenabfrageeinrichtung 41 vor. Derartige Interpolatoren 32 sind an sich bekannt.

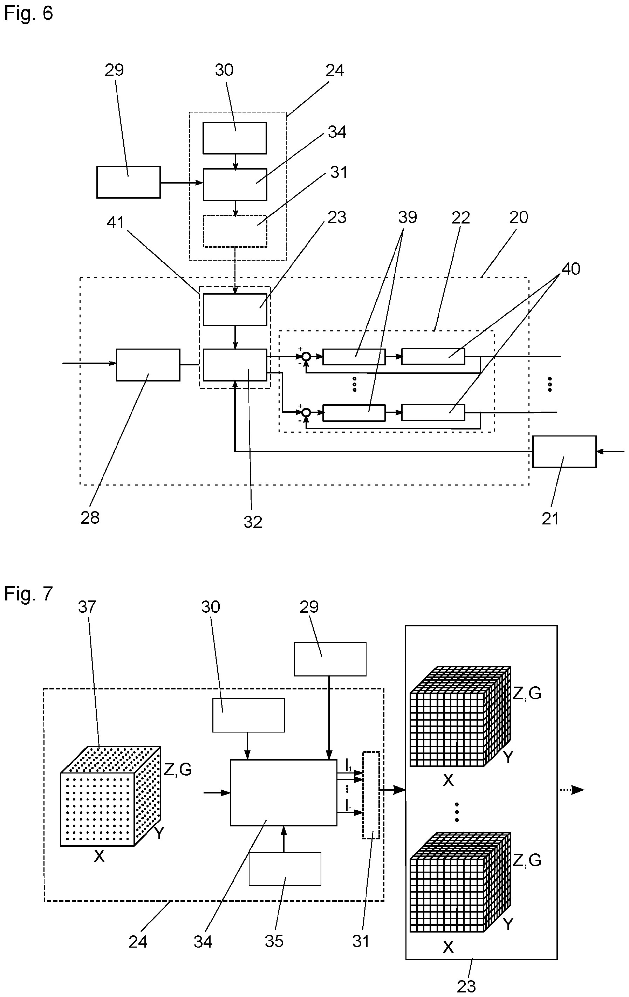

In Fig. 6 ist insbesondere die Seillängenregelung 22 noch etwas detaillierter mit Blockschaltbildern angedeutet. Insbesondere ist in Fig. 6 ersichtlich, dass für jedes der Positionierseile 6a-d und das Hubseil 10 eine eigene Regelung erfolgt, was durch die eingezeichneten drei Punkte symbolisch angedeutet ist.

Im Ausführungsbeispiel weist die Seillängenregelung 22 einen, an sich bekannten, Reglerbaustein 39 und die symbolisch dargestellte Regelstrecke 40 auf. Wie bereits erläutert, passt der Seillängenregler 22 die Ist-Seillänge des jeweiligen Positionierseils 6a-d und des Hubseils 10 an die einzustellenden Soll-Seillängen des jeweiligen Positionierseils 6a-d bzw. des Hubseils 10 durch Ansteuern der jeweiligen Positionierseilwinde 7 bzw. der Hubseilwinde 11 an. Die Ansteuerung der jeweiligen Positionierseilwinde 6a-d und der Hubseilwinde 10 ist in Fig. 6 durch die Regelstrecke 40 symbolisiert dargestellt. Im Weiteren ist in Fig. 6 auch die Bestimmung des Lastmesswertes durch Messen des Gewichts der an der Lastaufnahmevorrichtung 5 aufgenommenen Last 3 mittels der Lastmesseinrichtung 21 symbolisch dargestellt. Hier ist deutlich erkennbar, dass der Lastmesswert dem Interpolator 32 der Datenabfrageeinheit 41 zugeführt wird, wobei der Interpolator 32 die einzustellende Soll-Seillänge des jeweiligen Seils ermittelt. Die jeweils einzustellende Soll-Seillänge könnte in diesem Zusammenhang auch als die Führungsgröße der Seillängenregelung 22 bezeichnet werden.

Die Lastentransporteinrichtung 1 weist im Ausführungsbeispiel eine Datenaufbereitungseinrichtung 24 auf, die von der Regeleinrichtung 20 separiert ist. Eine, in den Figuren nicht näher bezeichnete, Datenverbindungsleitung zwischen der Datenaufbereitungseinrichtung 24 und der Regeleinrichtung 20 ist in Fig. 5 und 6 gestrichelt dargestellt. Die Datenaufbereitungseinrichtung 24 dient im Ausführungsbeispiel zur Ermittlung der vorab berechneten Soll-Seillängen der Positionierseile 6a-d und des Hubseils 10, worauf im Folgenden noch im Detail eingegangen wird.

Die Datenverbindung zwischen der Regeleinrichtung 20 und der Datenaufbereitungseinrichtung 24 kann ständig aufrecht sein, was jedoch nicht zwingend ist, da die Regeleinrichtung 20 unabhängig von der Datenaufbereitungseinrichtung 24 arbeiten kann. Insbesondere ist es möglich, dass die Datenverbindung zwischen der Datenaufbereitungseinrichtung 24 und der Regeleinrichtung 20 nur einmalig, **z.B.** bei der Erstinbetriebnahme der Lastentransporteinrichtung 1 besteht, oder diese nach Bedarf zum Einbringen von Datensätzen in die Datenbasis 23 etabliert wird.

In der Datenaufbereitungseinrichtung 24 ist im Ausführungsbeispiel ein Modell der indirekten Kinematik 30 der Lastentransporteinrichtung 1 hinterlegt. Das Modell der indirekten Kinematik 30 beschreibt das mathematische Rechengerüst, mit dem aufgrund von vorgegebenen Zielkoordinaten der vorgegebenen Zielpunkte und vorgegebener Lastwerte die Soll-Seillängen der Positionierseile 6a-d vorab berechnet werden. Beispielsweise beschreibt das Modell der indirekten Kinematik 30 die physikalischen Zusammenhänge der Seilstatik des jeweiligen Positionierseils etc., wie dies eingangs bereits erläutert ist.

Das Modell der indirekten Kinematik 30 berücksichtigt in bevorzugten Ausführungsformen, wie im gezeigten Ausführungsbeispiel, das spezifische Seilgewicht des jeweiligen Positionierseils 6a-d bei der Berechnung der vorab berechneten Soll-Seillängen der Positionierseile 6a-d. Im Weiteren ist es günstig, das spezifische Seilgewicht auch beim Hubseil 10 zu berücksichtigen. Wie bereits erläutert, könnte das Modell der indirekten Kinematik 30 bei einer Berücksichtigung des spezifischen Seilgewichtes, wie im Ausführungsbeispiel gezeigt, auch als Modell der erweiterten indirekten Kinematik bezeichnet werden.

Im Weiteren ist in der Datenaufbereitungseinrichtung 24 ein Optimierer 34 vorgesehen, der, unter Berücksichtigung von Design-Parametern 29 Lösungen der indirekten Kinematik 30 für die Soll-Seillängen der Positionierseile 6a-d durch Anwendung numerischer Mathematik ermittelt. Derartige Optimierer 34 sind in vielfältiger Art und Weise bekannt.

Die Design-Parameter 29 zur Berechnung der vorab berechneten Soll-Seillängen der Positionierseile 6a-d in der Datenaufbereitungseinrichtung 24 können zumindest einen der folgenden Kennwerte umfassen:

- die Position der von Seilablaufpunkten der Aufhängevorrichtungen 9, an denen das jeweilige Positionierseil 6a-d von der jeweiligen Aufhängevorrichtung 9 in eine Richtung hin zum Lastenträger 4 abläuft;
- die Positionen der Positionierseilwinden 7 und der Hubseilwinde 10;
- die spezifische Seildehnung des jeweiligen Positionierseils 6a-d;

Auch weitere Kennwerte der Lastentransporteinrichtung 1 können als Design-Parameter berücksichtigt werden, wie dies bereits eingangs erläutert ist.

In der Datenaufbereitungseinrichtung 24 sind im Weiteren Optimierungsbedingungen 35 hinterlegt, die dazu dienen, genau eine plausible Lösung für die Soll-Seillängen der Positionierseile 6a-d zu ermitteln. Im Ausführungsbeispiel ist **z.B.** vorgesehen, dass die Optimierungsbedingung die kleinste Seilkraft der Positionierseile 6a-d berücksichtigt. Im Weiteren kann **z.B.** die kleinste Summe der Seilkräfte der Positionierseile 6a-d als Optimierungsbedingung herangezogen werden. Weitere Beispiel von Optimierungsbedingungen sind eingangs bereits erläutert und könnten beispielsweise der kleinste Durchhang der Positionierseile 6a-d sein. Die Optimierungsbedingungen 35 dienen dazu, die Stabilität des Optimierers 34 zu verbessern und die Zuverlässigkeit der Ermittlung genau einer richtigen Lösung der Soll-Seillängen der Positionierseile 6a-d zu gewährleisten.

Fig. 7 illustriert den Vorgang eines Datenaufbereitungsschritts des Verfahrens im Detail. Die vorgegebenen Zielkoordinaten der vorgegebenen Zielpunkte und die vorgegebenen Lastwerte sind gemeinsam als, in der Datenaufbereitungseinrichtung 24 hinterlegte, Vorgabedaten 37 in Form eines angedeuteten vierdimensionalen Würfels mit den Koordinaten X, Y, Z und G schematisch eingezeichnet. Die Granularität, **d.h.** die Anzahl, der möglichen Zielkoordinaten ist, ebenso wie die Granularität bzw. Schrittweite der vorgegebenen Lastwerte zwischen einem Minimal- und Maximalwert sind, je nach Einsatzgebiet der Lastentransporteinrichtung 1 vorgebbar, wie dies eingangs erwähnt ist.

Im Datenaufbereitungsschritt werden im Weiteren die Koordinaten X, Y, Z der vorgegebenen Zielkoordinaten und die Lastwerte G der Vorgabedaten 37 dem Optimierer 34 zugeführt. Vom Optimierer 34 werden dann mittels des Modells der , im Ausführungsbeispiel insbesondere durch die Berücksichtigung des spezifischen Seilgewichts erweiterten, indirekten Kinematik 30 für die Vorgabedaten 37 gültige Lösungen für die vorab berechneten Soll-Seillängen der Positionierseile 6a-d und das Hubseil 10 ermittelt. Diese vorab berechneten Soll-Seillängen der Positionierseile 6a-d und das Hubseil 10 sind in Fig. 7 als L1 ... Ln allgemein eingezeichnet. Die gültigen Lösungen der vorab berechneten Soll-Seillängen der Positionierseile 6a-d und des Hubseils 10 sowie des jeweils zugehörigen Lastwerts und der zugehörigen Zielkoordinaten werden im Weiteren von der Datenaufbereitungseinrichtung 24 in der Datenbasis 23 der Regeleinrichtung 22 als Datensätze abgelegt. Die in Fig. 7 an die Datenbasis 23 anschließende punktierte Linie mit Pfeilspitze deutet die Verbindung mit dem Interpolator 32 an, der in Fig. 6 ersichtlich ist.

Es wird an dieser Stelle darauf hingewiesen, dass es sich bei der symbolhaften Darstellung der Datensätze in der Datenbasis 23 und der Vorgabedaten 37 gemäß Fig. 7 um sehr vereinfachte Darstellungen handelt, da vierdimensionale Tabellen bzw. Zusammenhänge nur stark vereinfacht dargestellt werden können. Ein jeweiliger Würfel der Datenbasis 23 stellt daher nur symbolisiert die Werte eines jeweiligen der Positionierseile 6a-d dar. Die in Fig. 7 eingezeichneten drei Punkte deuten daher die Vielzahl von entsprechenden vierdimensionalen Daten an.

Im Ausführungsbeispiel ist in der Datenaufbereitungseinrichtung 24 ein Vernetzungsalgorithmus 31 hinterlegt, der die vorgegebenen Zielkoordinaten zu einem Berechnungsnetz, **z.B.** einem Polygonnetz, insbesondere einem Tetraedernetz, als Berechnungsnetz-Daten vernetzt. Die Berechnungsnetz-Daten umfassen Verknüpfungsdaten benachbarter vorgegebener Zielpositionen der Lastaufnahmevorrichtung 5 und vorgegebener Lastwerte der Last 3. Im Ausführungsbeispiel sind auch diese Berechnungsnetz-Daten in der Datenbasis 23 der Regeleinrichtung 20 abgelegt, was jedoch nicht gesondert dargestellt ist. Die Berechnungsnetz-Daten werden von der Regeleinrichtung 20 bei der Bestimmung der einzustellenden Soll-Seillänge des jeweiligen Positionierseils 6a-d und des Hubseils 10 berücksichtigt. Insbesondere bei der Verwendung eines Interpolators 32 können die Berechnungsnetz-Daten zum raschen Auffinden nächstliegender passender Datensätze herangezogen werden.

Im Ausführungsbeispiel handelt es sich beim Vernetzungsalgorithmus 31 um eine Delaunay-Triangulierung, die Tetraedernetze verwendet. In einer abgewandelten Form könnte auf einen Vernetzungsalgorithmus 31 verzichtet werden, weshalb dieser in den Figuren in gestrichelten Linien dargestellt ist.

Im Ausführungsbeispiel ist vorgesehen, dass in der Datenaufbereitungseinrichtung 24 ein, nicht explizit gezeigter, Iterationsalgorithmus hinterlegt ist. Der Iterationsalgorithmus dient dazu, das Berechnungsnetz in Randbereichen des Arbeitsraums 2 zu verfeinern, wobei für Zusatzkoordinaten von Zusatzpositionen der Lastaufnahmevorrichtung 5 vorab berechnete Soll-Seillängen der Positionierseile 6a-d und im Ausführungsbeispiel auch für das Hubseil 10 im Randbereich des Arbeitsraums 2 ermittelt werden. Durch das Verdichten des Berechnungsnetzes in Randbereichen des Arbeitsraumes 2 kann der Arbeitsraum 2 vergrößert werden, da damit zusätzliche gültige Lösungen der vorab berechneten Soll-Seillängen ermittelt werden.

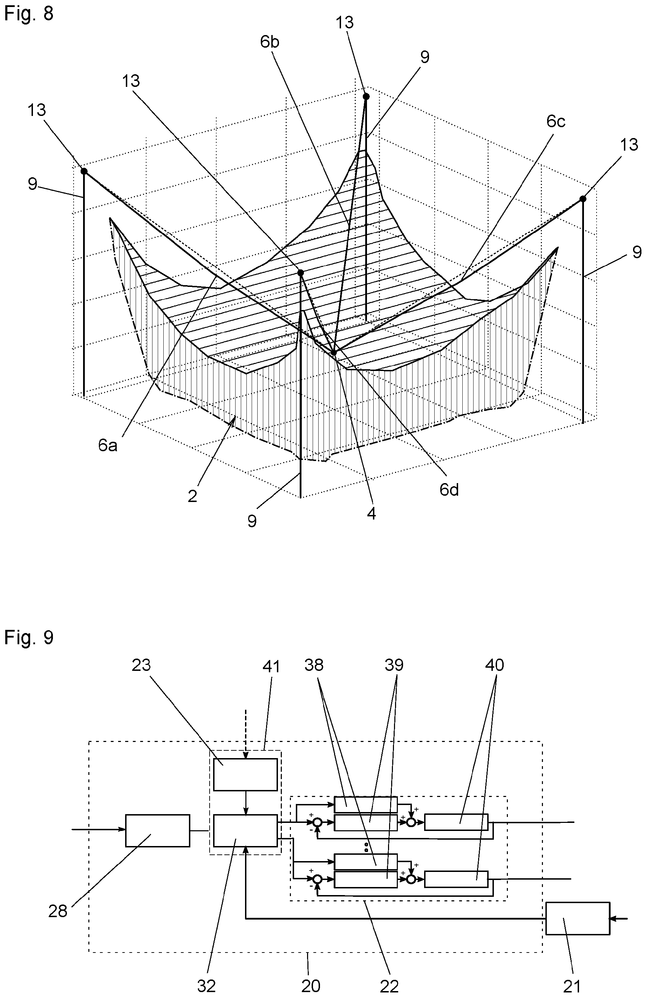

In Fig. 8 ist der Arbeitsraum 2 der Lastentransporteinrichtung 1 dargestellt, der die vorgegebenen Zielpunkte, für die mittels des Optimierers gültige Lösungen für die Soll-Seillängen der Positionierseile 6a-6d bei den vorgegebenen Lastwerten ermittelt wurden, repräsentiert. Die einzelnen vorgegebenen Zielpunkte, für die die gültigen Lösungen ermittelt wurden, sind in Fig. 8 nicht explizit dargestellt. Die den Arbeitsraum 2 beschreibenden Daten können zusätzlich der schon erwähnten Bahnplanungssoftware zur Verfügung gestellt werden, um die anfahrbaren Bereiche der Lastentransporteinrichtung 1 bei der Bahnplanung zu berücksichtigen.

Fig. 8 verdeutlicht auch, dass die Positionierseile 6a-d, durch die schon erwähnte Berücksichtigung des spezifischen Seilgewichts im Modell der erweiterten indirekten Kinematik 30, einem Durchhang unterworfen sind, was durch einen Vergleich der gestrichelten geraden Linien zwischen den Ablenkrollen 13 und dem Lastenträger 4 mit dem tatsächlichen Verlauf der Seile 6a-d in dieser Figur ersichtlich ist.

Fig. 9 zeigt noch eine Abwandlungsform der Lastentransporteinrichtung 1, bei der in im Seillängenregler 22 eine Vorsteuerung 38 vorgesehen ist. Durch das Vorsehen der Vorsteuerung 38 Vorsteuerungen kann die Performance und Stabilität der Seillängenregelung verbessert werden, was im Bereich der Regelungstechnik hinlänglich bekannt. Abgesehen davon ist die Regeleinrichtung 20 identisch zur Darstellung gemäß Fig. 6.

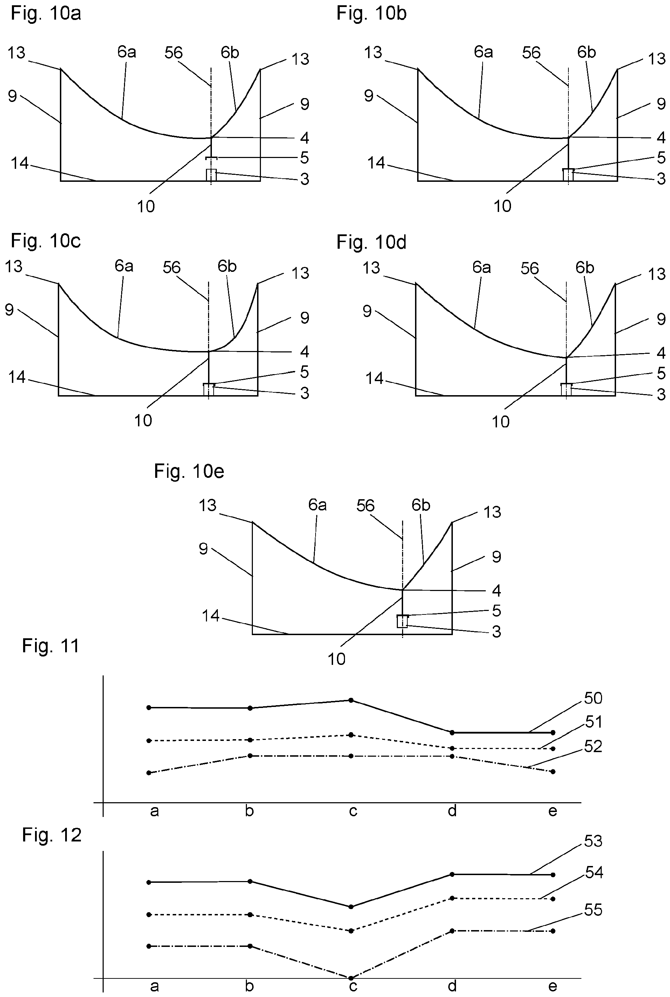

In den Fig. 10a bis 10e ist ein Ablauf des Aufnehmens einer Last 3 schematisiert dargestellt, um die Funktionsweise der Seillängenregelung 22 beim Betrieb der Lastentransporteinrichtung 1 ergänzend zu erläutern. Die Fig. 10a bis 10e zeigen eine stark vereinfachte Lastentransporteinrichtung 1 in einer zweidimensionalen Darstellung, wobei lediglich zwei Positionierseile 6a und 6b, sowie ein Hubseil 10 eingezeichnet sind. Das Hubseil 10 ist der Einfachheit halber nur zwischen dem Lastenträger 4 und der Lastaufnahmevorrichtung 5 eingezeichnet.

Die Fig. 11 zeigt ein schematisiertes Diagramm des Verlaufs der Ist-Seillängen der Positionierseile 6a und 6b und des der Ist-Seillänge des Hubseils 10 in den fünf Schritten a bis e gemäß der in den Fig. 10a bis 10e dargestellten Schritte. Die Ist-Seillänge 50 des Positionierseiles 6a ist mit durchgezogener Linie und die Ist-Seillänge 51 des Positionierseiles 6b gestrichelt dargestellt. Die Ist-Seillänge 52 des Hubseils 10 ist mit strichpunktierter Linie eingezeichnet. Die Linien zwischen den Punkten a bis e dienen lediglich zur Verbesserung der Ablesbarkeit der unterschiedlichen Ist-Seillängen.

Fig. 12 zeigt ein Diagramm des Verlaufs der Seilkräfte in den Positionierseilen 6a und 6b und des Hubseils 10 in den fünf Schritten a bis e gemäß Fig. 10a bis 10e. Die Seilkraft 53 des Positionierseils 6a ist mit durchgezogenen Linien, die Seilkraft 54 des Positionierseils 6b mit gestrichelten Linien und die Seilkraft 55 mit strichpunktierten Linien eingezeichnet. Die Linien zwischen den Punkten a bis e dienen auch hier lediglich zur Verbesserung der Ablesbarkeit der unterschiedlichen Seilkräfte.

Fig. 10a zeigt nun eine Situation in der sich die Lastaufnahmevorrichtung 5 über der Last 3 befindet. D.h. die Lastaufnahmevorrichtung 5 und der Lastenträger 4 befinden sich, wie durch die eingezeichnete Vertikale 56 verdeutlicht, vertikal über der Last 3.

In Fig. 10b ist die Ist-Seillänge 52 des Hubseils 10 gegenüber Fig. 10a verlängert, sodass sich die Lastaufnahmevorrichtung 5 knapp über der Last 3 befindet. Die Position des Lastenträgers 4 ist gegenüber Fig. 10a unverändert, d.h., die Ist-Seillängen 50, 51 sind gegenüber Fig. 10a unverändert, vgl. Punkt b in Fig. 11. Die Seilkräfte 53, 54, 55 bleiben im Wesentlichen konstant, vgl. Punkt b in Fig. 12.

In der in Fig. 10c dargestellten Situation ist der Lastenträger 5 auf der Last 3 abgestellt, sodass die Positionierseile 6a, 6b im Vergleich zu den Fig. 10a und 10b etwas stärker durchhängen und das Hubseil 10 entlastet ist, vgl. die Seilkräfte in Fig. 12 an Punkt c. Damit der Lastenträger 4 in vertikaler Richtung über der Lastaufnahmevorrichtung 5 verbleibt, sind die Ist-Seillängen der Positionierseile 6a, 6b gegenüber Punkt b leicht verlängert angesteuert, vgl. auch Fig. 11.

Fig. 10d zeigt eine Situation, bei der die Last 3 gerade vom Untergrund 14 abgehoben ist. Es ist ersichtlich, dass die Positionierseile 6a und 6b stark gespannt und die Ist-Seillängen 50, 51 gegenüber Fig. 10c verkürzt sind, während das Hubseil 10 unverändert dieselbe Länge hat wie in Fig. 10c dargestellt, vgl. auch Fig. 11. D.h., es ist vorgesehen, dass bis zum unmittelbaren Abheben der Last 3 vom Untergrund 14 die Seillängenregelung 22 nur durch einer Veränderung der Ist-Seillängen 50, 51 der Positionierseile 6a, 6b erfolgt. In anderen Worten wird während des Abhebevorgangs einer noch auf dem Untergrund 14 aufliegenden Last 3 durch ein Anspannen der Positionierseile 6a, 6b mittels der Lastmesseinrichtung 21 ein Anstieg des Lastmesswerts gemessen, sodass mittels des Interpolators 32 neue einzustellende Soll-Seillängen für die Positionierseile 6a und 6b ermittelt werden und die Seillängenregelung 22 eine Anpassung der Ist-Seillängen 50, 51 an die einzustellenden Soll-Seillängen der Positionierseile 6a, 6b vornimmt. Der Abstand der Lastaufnahmevorrichtung 5 vom Lastenträger 4 in vertikaler Richtung bleibt aufgrund der sich nicht verändernden Länge des Hubseils 10 konstant. Dadurch kann sichergestellt werden, dass sich der Lastenträger 4 bis zum Abheben der Last 3 in vertikaler Richtung stets über der Last 3 bzw. der Lastaufnahmevorrichtung 5 befindet. D.h., ein Verschwenken der Last 3 zum Zeitpunkt des unmittelbaren Abhebens der Last 3 vom Untergrund 14 kann dadurch verhindert werden.

In Fig. 10e ist die Last 3 noch weiter vom Untergrund 14 abgehoben, wobei nun lediglich das Hubseil 10 gegenüber der Situation in Fig. 10d verkürzt ist. Die Seilkräfte 53-55 bleiben gegenüber der in Fig. 10d gezeigten Situation im Wesentlichen konstant, vgl. Fig. 12.

Durch das Messen des Gewichts der Last 3 ist es mit der Seillängenregelung 22 möglich, eine Nachregelung der Ist-Seillängen der Positionierseile 6a-d und des Hubseils 10 in Abhängigkeit der gemessenen Last zu realisieren. Dies ist in den Fig. 10a bis 10e dadurch ersichtlich, dass der Lastenträger 4 und die Lastaufnahmevorrichtung 5 und die Last 3 stets auf der Vertikalen 56 verbleiben. Erfolgt keine Seillängenregelung 22 in dieser Art und Weise, so würde es aufgrund der unsymmetrischen Aufteilung der Ist-Seillängen der Positionierseile 6a, 6b beim Abheben der Last 3 zu einem Aufschwingen der Last 3 in horizontaler Richtung kommen.

Beim erfindungsgemäßen Verfahren kann die Nachregelung der Ist-Seillänge der Positionierseile 6a und 6b und des Hubseils 10 durch Abfrage neuer Soll-Seillängen der Positionierseile 6a, 6b und des Hubseils 10 in der Datenbasis 23 für den einzustellenden Zielpunkt erfolgen, sodass die Last 3 zuverlässig in vertikaler Richtung angehoben wird. Durch das erfindungsgemäße Verfahren kann auf einfache Art und Weise sichergestellt werden, dass es beim Abheben der Last 3 vom Untergrund 14 zu keinem Aufschwingen der Last 3 bzw. der Lastaufnahmevorrichtung 5 gegenüber dem Lastenträger 4 kommt. Dies ist insbesondere auch bei einem Transportieren der Last 3 über einer unebenen Topographie des Untergrunds 3 oder beim Umfahren von Hindernissen vorteilhaft, um Kollisionen zu verhindern.

Auch beim Aufnehmen von Schüttgut mittels einer einen Schürfkübel aufweisenden Lastaufnahmevorrichtung kann durch eine kontinuierliche Messung des Gewichts der Last, **d.h.** der aktuell aufgenommen Menge bzw. Masse an Schüttgut, durch eine Nachregelung der Ist-Seillängen auf veränderte Lastmesswerte reagiert werden, um beispielsweise ein unzulässiges Durchhängen eines oder mehrerer Positionierseile beim Aufnehmen von Schüttgut zu verhindern. Ähnliches gilt auch beim Entleeren bzw. Entladen des Schürfkübels oder eines anderen an der Lastaufnahmevorrichtung angeordneten Greifers, **z.B.** eines Schüttgutgreifers, um bei der Veränderung der an der Lastaufnahmevorrichtung gemessenen Last (durch Entladen von Schüttgut etc.) mittels einer Nachregelung der Ist-Seillängen der Positionierseile einen horizontalen Versatz des Lastenträgers bzw. der Lastaufnahmevorrichtung beim teilweisen oder vollständigen Entladen der Last zu verhindern.

Das erfindungsgemäße Verfahren kann auch bei einer Lastentransporteinrichtung 1 angewandt werden, bei der der Abstand der Lastaufnahmevorrichtung 5 gegenüber dem Lastenträger 4 stets konstant ist, d.h., wenn gegenüber dem zuvor erläuterten Ausführungsbeispiel auf ein Hubseil 10 und die damit verbundene Möglichkeit einer gegenüber dem Lastenträger 4 heb- und senkbaren Lastaufnahmevorrichtung 5 verzichtet wird. In anderen Worten ist dann die in Fig. 1 gezeigte Lastentransporteinrichtung 1 derart ausgestaltet, dass die als Haken ausgeführte Lastaufnahmevorrichtung 5 mit einem fixierten Abstand am Lastenträger 4 hängt. D.h., sämtliche Bewegungen des Lastenträgers 4 und der daran befestigten Lastaufnahmevorrichtung 5 im Arbeitsraum 2 erfolgt bei dieser Variante anhand einer Veränderung der Ist-Seillängen der Positionierseile 6a-d. Wie bereits erwähnt, könnte die Lastaufnahmevorrichtung 5 auch unmittelbar am Lastenträger 4 befestigt sein.

Im Unterschied zu den Darstellungen in den Figuren 2 bis 4 kann dann auf eine Hubseilwinde 11 verzichtet werden, sodass auch die in Fig. 5 angedeutete Seillängenregelung 22 des Hubseils 10 wegfällt. Der übrige Aufbau gemäß Fig. 5 hinsichtlich der Seillängenregelung 22 der Positionierseile 6a-6d ist unverändert, wobei eine Vorabberechnung von vorab berechneten Soll-Seillängen des Hubseils 10 weggelassen wird. D.h., die Darstellungen gemäß Fig. 6 bis 9 gelten auch für die Ausführungsvariante bei der der Abstand der Lastaufnahmevorrichtung 5 vom Lastenträger 4 konstant ist und die Seillängenregelung 22 ausschließlich in Hinblick auf die Positionierseile 6a-d analog wie beim zuvor erläuterten Ausführungsbeispiel durchgeführt wird.

Der Vorgang des Abhebens einer Last 3 vom Untergrund 14 kann auch bei einem Verzicht auf das Hubseil 10 den Fig. 10b bis 10d entnommen werden, da bei den in diesen Figuren dargestellten Situationen das Hubseil 10 eine konstante Länge aufweist. Die in Fig. 11 gezeigte Ist-Seillänge 52 des Hubseils 10 und der Verlauf der Seilkraft 55 des Hubseils 10 kann somit ignoriert werden.

In Fig. 10b ist die Lastaufnahmevorrichtung 5 knapp über der Last 3 angeordnet. Der Lastenträger 4 befindet sich in vertikaler Richtung über der Lastaufnahmevorrichtung 5.

In der in Fig. 10c dargestellten Situation ist der Lastenträger 5 durch ein Nachlassen der Positionierseile 6a, 6b auf der Last 3 abgestellt, sodass die Positionierseile 6a, 6b im Vergleich zu den Fig. 10b etwas stärker durchhängen, vgl.

die Seilkräfte 53, 54 in Fig. 12 an Punkt c.

Fig. 10d zeigt die Situation, bei der die Last 3 gerade vom Untergrund 14 abgehoben ist. Es ist ersichtlich, dass die Positionierseile 6a und 6b stark gespannt und die Ist-Seillängen 50, 51 gegenüber Fig. 10c verkürzt sind. Während des Abhebevorgangs einer noch auf dem Untergrund 14 aufliegenden Last 3 wird durch ein Anspannen der Positionierseile 6a, 6b mittels der Lastmesseinrichtung 21 ein Anstieg des Lastmesswerts gemessen, sodass mittels des Interpolators 32 neue einzustellende Soll-Seillängen für die Positionierseile 6a und 6b ermittelt werden und die Seillängenregelung 22 eine Anpassung der Ist-Seillängen 50, 51 an die einzustellenden Soll-Seillängen der Positionierseile 6a, 6b vornimmt. Dadurch kann sichergestellt werden, dass sich der Lastenträger 4 bis zum Abheben der Last 3 in vertikaler Richtung stets über der Last 3 bzw. der Lastaufnahmevorrichtung 5 befindet. D.h., ein Verschwenken der Last 3 zum Zeitpunkt des unmittelbaren Abhebens der Last 3 vom Untergrund 14 kann dadurch verhindert werden.

Der Weitertransport der Last 3 im Arbeitsraum 2 erfolgt bei dieser Ausführungsvariante, wie erwähnt, ausschließlich über eine Ansteuerung der Positionierseilwinden 7.


**Legende** zu den Hinweisziffern:

| | |
|---|---|
| 1 | Lastentransporteinrichtung |
| 2 | Arbeitsraum |
| 3 | Last |
| 4 | Lastenträger |
| 5 | Lastaufnahmevorrichtung |
| 6a | Positionierseil |
| 6b | Positionierseil |
| 6c | Positionierseil |
| 6d | Positionierseil |
| 7 | Positionierseilwinde |
| 8 | Positionierseilwindenantrieb |
| 9 | Aufhängevorrichtung |
| 10 | Hubseil |
| 11 | Hubseilwinde |
| 12 | Hubseilwindenantrieb |
| 13 | Ablenkrolle |
| 14 | Untergrund |

| | |
|---|---|
| 20 | Regeleinrichtung |
| 21 | Lastmesseinrichtung |
| 22 | Seillängenregelung |
| 23 | Datenbasis |
| 24 | Datenaufbereitungseinrichtung |
| 25 | Absolutwertgeber |
| 26 | Eingabeeinrichtung |
| 27 | Bahnplanungsschnittstelle |
| 28 | Zielkoordinatenumrecheneinheit |
| 29 | Design-Parameter |
| 30 | Modell der indirekten Kinematik |
| 31 | Vernetzungsalgorithmus |
| 32 | Interpolator |
| 33 | Frequenzumrichter |
| 34 | Optimierer |
| 35 | Optimierungsbedingungen |

| | |
|---|---|
| 37 | Vorgabedaten |
| 38 | Vorsteuerung |
| 39 | Reglerbaustein |
| 40 | Regelstrecke |
| 41 | Datenabfrageeinheit |

| 50 | Ist-Seillänge |
| 51 | Ist-Seillänge |
| 52 | Ist-Seillänge |
| 53 | Seilkraft |
| 54 | Seilkraft |
| 55 | Seilkraft |
| 56 | Vertikale |

**Patentansprüche**

1. Verfahren zum Regeln einer Bewegung einer Last (3) in einem Arbeitsraum (2) einer Lastentransporteinrichtung (1) mittels einer Regeleinrichtung (20) der Lastentransporteinrichtung (1), wobei die Lastentransporteinrichtung (1) einen Lastenträger (4) und zumindest eine am Lastenträger (4) befestigte Lastaufnahmevorrichtung (5) zur Aufnahme der Last (3) und zumindest drei Positionierseile (6a, 6b, 6c, 6d) und zumindest drei voneinander distanziert angeordnete Aufhängevorrichtungen (9) aufweist, wobei jede Aufhängevorrichtung (9) zumindest eine Positionierseilwinde (7) zum Auf- und Abwickeln eines der Positionierseile (6a, 6b, 6c, 6d) aufweist und der Lastenträger (4) mittels der Positionierseile (6a, 6b, 6c, 6d) an den Aufhängevorrichtungen (9) hängt, wobei der Lastenträger (4) und die daran befestigte Lastaufnahmevorrichtung (5) durch Ansteuern der Positionierseilwinden (7) im und/oder über dem Arbeitsraum (2) verfahrbar sind, wobei das Verfahren die Schritte umfasst:

   - Erfassen von aktuell einzustellenden Zielkoordinaten eines Zielpunkts im Arbeitsraum (2), zu dem die Lastaufnahmevorrichtung (5) hinbewegt werden soll;
   - Bestimmung eines Lastmesswertes durch Messen des Gewichts der an der Lastaufnahmevorrichtung (5) aufgenommenen Last (3) mittels einer Lastmesseinrichtung (21) der Lastentransporteinrichtung (1);
   - Bestimmen der Ist-Seillängen der Positionierseile (6a, 6b, 6c, 6d);
   - Ermitteln der von der jeweiligen Positionierseilwinde (7) durch Auf- oder Abwickeln einzustellenden Soll-Seillängen der Positionierseile (6a, 6b, 6c, 6d) für die aktuell einzustellenden Zielkoordinaten des Zielpunkts und den aktuellen Lastmesswert;
   - Anpassung der Ist-Seillängen der jeweiligen Positionierseile (6a, 6b, 6c, 6d) an die einzustellenden Soll-Seillängen der jeweiligen Positionierseile (6a, 6b, 6c, 6d) durch Ansteuern der jeweiligen Positionierseilwinde (7) mittels einer Seillängenregelung (22) der Regeleinrichtung (20) und Auf- oder Abwickeln der jeweiligen Positionierseile (6a, 6b, 6c, 6d);

   **dadurch gekennzeichnet, dass** die Regeleinrichtung (20) eine Datenbasis (23) aufweist, in der eine Vielzahl von Datensätzen abgespeichert ist, wobei in jedem Datensatz für vorgegebene Zielkoordinaten eines vorgegebenen Zielpunkts und einen vorgegebenen Lastwert für jeweils eines der Positionierseile (6a, 6b, 6c, 6d) eine vorab berechnete Soll-Seillänge abgelegt ist, und die von der jeweiligen Positionierseilwinde (7) einzustellenden Soll-Seillängen der Positionierseile (6a, 6b, 6c, 6d) von der Regeleinrichtung (20) mittels einer Abfrage in der Datenbasis (23) ermittelt werden, indem von der Regeleinrichtung (20) für jedes der Positionierseile (6a, 6b, 6c, 6d) zumindest ein zu den aktuell einzustellenden Zielkoordinaten des Zielpunkts und dem aktuellen Lastmesswert passender Datensatz in der Datenbasis (23) gesucht wird und die einzustellende Soll-Seillänge des jeweiligen Positionierseils (6a, 6b, 6c, 6d) auf Basis der vorab berechneten Soll-Seillänge des zumindest einen passenden Datensatzes bestimmt wird.

2. Verfahren nach Anspruch 1, **dadurch gekennzeichnet, dass** die aktuell einzustellenden Zielkoordinaten mittels einer Zielkoordinatenumrecheneinheit (28) der Regeleinrichtung (20) aus einem, von einer Bewegungsvorgabeeinrichtung der Lastentransporteinrichtung (1) ausgegebenen, Vorgabe-Geschwindigkeitsvektor berechnet werden.

3. Verfahren nach Anspruch 1 oder 2, **dadurch gekennzeichnet, dass** von der Regeleinrichtung (20) für jedes der Positionierseile (6a, 6b, 6c, 6d) zumindest zwei zu den aktuell einzustellenden Zielkoordinaten des Zielpunkts und dem aktuellen Lastmesswert nächstliegenden Datensätze in der Datenbasis (23) gesucht werden und die einzustellende Soll-Seillänge des jeweiligen Positionierseils (6a, 6b, 6c, 6d) auf Basis der vorab berechneten Soll-Seillängen der zumindest zwei nächstliegenden Datensätze durch Interpolation bestimmt wird.

4. Verfahren nach einem der Ansprüche 1 bis 3, **dadurch gekennzeichnet, dass** die Seillängenregelung (22) eine Vorsteuerung (38) der einzustellenden Soll-Seillänge der Positionierseile (6a, 6b, 6c, 6d) aufweist.

5. Verfahren nach einem der Ansprüche 1 bis 4, **dadurch gekennzeichnet, dass** die Vorabberechnung der vorab berechneten Soll-Seillängen der Positionierseile (6a, 6b, 6c, 6d) in einem Datenaufbereitungsschritt des Verfahrens in einer von der Regeleinrichtung (20) separierten Datenaufbereitungseinrichtung (24) der Lastentransporteinrichtung (1) durchgeführt wird, wobei in der Datenaufbereitungseinrichtung (24) ein Modell der indirekten Kinematik (30) der Lastentransporteinrichtung (1) und ein Optimierer (34) hinterlegt werden, und dem Optimierer (34) das Modell der indirekten Kinematik (30) und die vorgegebenen Lastwerte sowie die vorgegebenen Zielkoordinaten der vorgegebenen Zielpunkte zugeführt werden, und vom Optimierer (34) mittels des Modells der indirekten Kinematik (30) für die vorgegebenen Lastwerte an den vorgegebenen Zielkoordinaten gültige Lösungen für die Soll-Seillängen der Positionierseile (6a, 6b, 6c, 6d) ermittelt werden, und die gültigen Lösungen als die vorab berechneten Soll-Seillängen der Positionierseile (6a, 6b, 6c, 6d) zusammen mit dem jeweils zugehörigen Lastwert und den jeweils zugehörigen vorgegebenen Zielkoordinaten von der Datenaufbereitungseinrichtung (24) in der Datenbasis (23) der Regeleinrichtung (20) als einer der Datensätze abgelegt werden.

6. Verfahren nach Anspruch 5, **dadurch gekennzeichnet, dass** im Datenaufbereitungsschritt das spezifische Seilgewicht des jeweiligen Positionierseils (6a, 6b, 6c, 6d) bei der Vorabberechnung der vorab berechneten Soll-Seillängen der Positionierseile (6a, 6b, 6c, 6d) im Modell der indirekten Kinematik (30) berücksichtigt wird.

7. Verfahren nach Anspruch 5 oder 6, **dadurch gekennzeichnet, dass** dem Datenaufbereitungsschritt zumindest eine Optimierungsbedingung aus:

- kleinster Durchhang der Positionierseile (6a, 6b, 6c, 6d);
- kleinste Seilkraft der Positionierseile (6a, 6b, 6c, 6d);
- kleinste Summe der Seilkräfte der Positionierseile (6a, 6b, 6c, 6d);
- höchste zulässige Seilkraft des jeweiligen Positionierseils (6a, 6b, 6c, 6d);
- kleinste Differenz der Seilkräfte der Positionierseile (6a, 6b, 6c, 6d);
- elastische Verformung der Aufhängevorrichtungen (9); zugrunde liegt.

8. Verfahren nach einem der Ansprüche 5 bis 7, **dadurch gekennzeichnet, dass** im Datenaufbereitungsschritt ein Vernetzungsalgorithmus angewandt wird, der die vorgegebenen Zielkoordinaten zu einem Berechnungsnetz, insbesondere einem Polygonnetz, als Berechnungsnetz-Daten vernetzt, wobei die Berechnungsnetz-Daten Verknüpfungsdaten zur Verknüpfung von benachbarten der vorgegebenen Zielkoordinaten des vorgegebenen Zielpunkts der Lastaufnahmevorrichtung (5) und benachbarte der vorgegebenen Lastwerte umfasst, und die Berechnungsnetz-Daten in der Datenbasis (23) der Regeleinrichtung (20) abgelegt werden, und die Berechnungsnetz-Daten von der Regeleinrichtung (20) bei der Bestimmung der einzustellenden Soll-Seillänge des jeweiligen Positionierseils (6a, 6b, 6c, 6d) berücksichtigt werden.

9. Verfahren nach Anspruch 8, **dadurch gekennzeichnet, dass** der Datenaufbereitungsschritt eine Iteration zur Verdichtung des Berechnungsnetzes in zumindest einem Randbereich des Arbeitsraumes (2) umfasst, wobei für Zusatzkoordinaten von Zusatzpositionen der Lastaufnahmevorrichtung (5) Soll-Seillängen der Positionierseile (6a, 6b, 6c, 6d) im Randbereich ermittelt werden.

10. Verfahren nach einem der Ansprüche 5 bis 9, **dadurch gekennzeichnet, dass** das Verfahren einen Schritt des Erfassens von Design-Parametern (29) zur Berechnung der vorab berechneten Soll-Seillängen der Positionierseile (6a, 6b, 6c, 6d) im Datenaufbereitungsschritt umfasst, wobei die Design-Parameter (29) zumindest einen der folgenden Kennwerte umfassen:

- die Position von Seilablaufpunkten der Aufhängevorrichtungen (9), an denen das jeweilige Positionierseil (6a, 6b, 6c, 6d) von der jeweiligen Aufhängevorrichtung (9) in eine Richtung hin zum Lastenträger (4) abläuft;
- die Positionen der Positionierseilwinden (7);
- die spezifische Seildehnung des jeweiligen Positionierseils (6a, 6b, 6c, 6d);
- die Steifigkeit der jeweiligen Aufhängevorrichtung (9);
- das Eigengewicht des Lastenträgers (4);
- das Eigengewicht der Lastaufnahmevorrichtung (5);
- den Massenschwerpunkt des Lastenträgers (4) und/oder der Lastaufnahmevorrichtung (5).

**Claims**

1. A method for closed-loop control of a movement of a load (3) in a working space (2) of a load transport means (1) by means of a control means (20) of the load transport means (1), wherein the load transport means (1) has a load carrier (4) and at least one load pickup device (5) which is fastened to the load carrier (4) for picking up the load (3), and at least three positioning cables (6a, 6b, 6c, 6d) and at least three suspension devices (9) arranged spaced apart from each other, wherein each suspension device (9) has at least one positioning cable winch (7) for winding and unwinding one of the positioning cables (6a, 6b, 6c, 6d), and the load carrier (4) is suspended from the suspension devices (9) by means of the positioning cables (6a, 6b, 6c, 6d), wherein the load carrier (4) and the load pickup device (5) which is fastened thereto are displaceable in and/or over the working space (2) by actuating the positioning cable winches (7), the method comprising the following steps:

- acquiring target coordinates, which are currently to be set, of a target point in the working space (2) towards which the load pickup device (5) is to be moved;
- determining a load measured value by measuring the weight of the load (3) picked up on the load pickup device (5) by means of a load measurement means (21) of the load transport means (1);
- determining the actual cable lengths of the positioning cables (6a, 6b, 6c, 6d);
- ascertaining the desired cable lengths of the positioning cables (6a, 6b, 6c, 6d) which are to be set by the respective positioning cable winch (7) by winding or unwinding for the target coordinates of the target point which are currently to be set, and for the current load measured value;
- adapting the actual cable lengths of the respective positioning cables (6a, 6b, 6c, 6d) to the desired cable lengths of the respective positioning cables (6a, 6b, 6c, 6d) which are to be set by actuating the respective positioning cable winch (7) by means of a cable-length regulation means (22) of the control means (20) and winding or unwinding the respective positioning cables (6a, 6b, 6c, 6d);

**characterised in that** the control means (20) has a database (23) in which a large number of data sets are stored, with a pre-calculated desired cable length being stored in each data set for predefined target coordinates of a predefined target point and for a predefined load value for one of the positioning cables (6a, 6b, 6c, 6d) in each case, and the desired cable lengths of the positioning cables (6a, 6b, 6c, 6d) which are to be set by the respective positioning cable winch (7) are ascertained by the control means (20) by querying the database (23) **in that** for each of the positioning cables (6a, 6b, 6c, 6d) at least one data set matching the target coordinates of the target point which are currently to be set and the current load measured value is searched in the database (23) by the control means (20), and the desired cable length of the respective positioning cable (6a, 6b, 6c, 6d) which is to be set is determined on the basis of the pre-calculated desired cable length of the at least one matching data set.

2. A method according to claim 1, **characterised in that** the target coordinates which are currently to be set are calculated by means of a target-coordinate conversion unit (28) of the control means (20) from a predefined velocity vector issued by a movement-prescribing means of the load transport means (1).

3. A method according to claim 1 or 2, **characterised in that** for each of the positioning cables (6a, 6b, 6c, 6d) at least two data sets which are closest to the target coordinates of the target point which are currently to be set and to the current load measured value are searched in the database (23) by the control means (20), and the desired cable length of the respective positioning cable (6a, 6b, 6c, 6d) which is to be set is determined by interpolation on the basis of the pre-calculated desired cable lengths of the at least two closest data sets.

4. A method according to one of claims 1 to 3, **characterised in that** the cable-length regulation means (22) has a pilot control (38) for the desired cable length of the positioning cables (6a, 6b, 6c, 6d) which is to be set.

5. A method according to one of claims 1 to 4, **characterised in that** the precalculation of the pre-calculated desired cable lengths of the positioning cables (6a, 6b, 6c, 6d) is carried out in a data-processing step of the method in a data-processing means (24), separate from the control means (20), of the load transport means (1), with a model of the indirect kinematics (30) of the load transport means (1) and an optimiser (34) being stored in the data-processing means (24), and the model of the indirect kinematics (30) and the predefined load values and also the predefined target coordinates of the predefined target points being supplied to the optimiser (34), and valid solutions for the desired cable lengths of the positioning cables (6a, 6b, 6c, 6d) being ascertained by the optimiser (34) by means of the model of the indirect kinematics (30) for the predefined load values at the predefined target coordinates, and the valid solutions as the pre-calculated desired cable lengths of the positioning cables (6a, 6b, 6c, 6d), together with the load value associated in each case and the predefined target coordinates associated in each case, being stored by the data-processing means (24) as one of the data sets in the database (23) of the control means (20).

6. A method according to claim 5, **characterised in that** in the data-processing step the specific cable weight of the respective positioning cable (6a, 6b, 6c, 6d) is taken into account in pre-calculating the pre-calculated desired cable lengths of the positioning cables (6a, 6b, 6c, 6d) in the model of the indirect kinematics (30).

7. A method according to claim 5 or 6, **characterised in that** the data-processing step is based on at least one optimisation condition from among:

   - lowest sag of the positioning cables (6a, 6b, 6c, 6d);
   - lowest cable force of the positioning cables (6a, 6b, 6c, 6d);
   - lowest sum of the cable forces of the positioning cables (6a, 6b, 6c, 6d);
   - highest permissible cable force of the respective positioning cable (6a, 6b, 6c, 6d);
   - smallest difference between the cable forces of the positioning cables (6a, 6b, 6c, 6d);
   - elastic deformation of the suspension devices (9).

8. A method according to one of claims 5 to 7, **characterised in that** in the data-processing step a meshing algorithm is applied which meshes the predefined target coordinates to form a computational mesh, in particular a polygonal mesh, as computational-mesh data, the computational-mesh data comprising linking data for linking adjacent ones of the predefined target coordinates of the predefined target point of the load pickup device (5) and adjacent ones of the predefined load values, and the computational-mesh data being stored in the database (23) of the control means (20), and the computational-mesh data being taken into account by the control means (20) in determining the desired cable length of the respective positioning cable (6a, 6b, 6c, 6d) which is to be set.

9. A method according to claim 8, **characterised in that** the data-processing step comprises an iteration for compressing the computational mesh in at least one edge region of the working space (2), with desired cable lengths of the positioning cables (6a, 6b, 6c, 6d) being ascertained for additional coordinates of additional positions of the load pickup device (5) in the edge region.

10. A method according to one of claims 5 to 9, **characterised in that** the method comprises a step of acquiring design parameters (29) for calculating the pre-calculated desired cable lengths of the positioning cables (6a, 6b, 6c, 6d) in the data-processing step, the design parameters (29) comprising at least one of the following characteristic values:

   - the position of cable run-off points of the suspension devices (9) at which the respective positioning cable (6a, 6b, 6c, 6d) runs off from the respective suspension device (9) in a direction towards the load carrier (4);
   - the positions of the positioning cable winches (7);
   - the specific cable elongation of the respective positioning cable (6a, 6b, 6c, 6d);
   - the rigidity of the respective suspension device (9);
   - the weight of the load carrier (4);
   - the weight of the load pickup device (5);
   - the centre of mass of the load carrier (4) and/or of the load pickup device (5).

**Revendications**

1. Procédé de réglage d'un mouvement d'une charge (3) dans un espace de travail (2) d'un dispositif de transport de charge (1) au moyen d'un dispositif de réglage (20) du dispositif de transport de charge (1), le dispositif de transport de charge (1) étant muni d'un porte-charge (4), et d'au moins un dispositif de réception de charge (5) fixé au porte-charge (4) pour recevoir la charge (3), et d'au moins trois câbles de positionnement (6a, 6b, 6c, 6d), et d'au moins trois dispositifs de suspension (9) disposés à distance les uns des autres, chaque dispositif de suspension (9) étant muni d'au moins un treuil de positionnement (7) pour enrouler et dérouler l'un des câbles de positionnement (6a, 6b, 6c, 6d), et le porte-charge (4) étant suspendu aux dispositifs de suspension (9) au moyen des câbles de positionnement (6a, 6b, 6c, 6d), le porte-charge (4) et le dispositif de réception de charge (5) qui y est fixé pouvant être déplacés dans et/ou au-dessus de l'espace de travail (2) par actionnement des treuils de positionnement (7), le procédé comprenant les étapes consistant à :

   - saisir des coordonnées cibles à enregistrer actuellement d'un point cible dans l'espace de travail (2) vers lequel le dispositif de réception de charge (5) doit être déplacé ;
   - déterminer une valeur de mesure de charge en mesurant le poids de la charge (3) reçue par le dispositif de réception de charge (5) au moyen d'un dispositif de mesure de charge (21) du dispositif de transport de charge (1) ;
   - déterminer les longueurs de câble réelles des câbles de positionnement (6a, 6b, 6c, 6d) ;

- calculer, pour les coordonnées cibles à enregistrer actuellement du point cible et pour la valeur de mesure de charge actuelle, les longueurs de câble de consigne des câbles de positionnement (6a, 6b, 6c, 6d) à régler par le treuil de positionnement (7) respectif par enroulement ou déroulement;

- adapter les longueurs de câble réelles des câbles de positionnement (6a, 6b, 6c, 6d) respectifs aux longueurs de câble de consigne à régler des câbles de positionnement (6a, 6b, 6c, 6d) respectifs en actionnant le treuil de positionnement (7) respectif au moyen d'une commande de longueur de câble (22) du dispositif de réglage (20) et en enroulant ou en déroulant les câbles de positionnement (6a, 6b, 6c, 6d) respectifs ;

**caractérisé en ce que** le dispositif de réglage (20) est muni d'une base de données (23) dans laquelle est mémorisée une pluralité d'ensembles de données, étant précisé que pour des coordonnées cibles prédéfinies d'un point cible prédéfini et pour une valeur de charge prédéfinie, une longueur de câble de consigne calculée préalablement est enregistrée dans chaque ensemble de données pour chacun des câbles de positionnement (6a, 6b, 6c, 6d), et les longueurs de câble de consigne des câbles de positionnement (6a, 6b, 6c, 6d) à régler par le treuil de positionnement (7) respectif sont déterminées par le dispositif de réglage (20) en interrogeant la base de données (23), le dispositif de réglage (20) cherchant pour cela dans la base de données (23), pour chacun des câbles de positionnement (6a, 6b, 6c, 6d), au moins un ensemble de données adapté aux coordonnées cibles à enregistrer actuellement du point cible et à la valeur de mesure de charge actuelle, et la longueur de câble de consigne à régler du câble de positionnement (6a, 6b, 6c, 6d) respectif est déterminée sur la base de la longueur de câble de consigne calculée préalablement dudit au moins un ensemble de données adapté.

2. Procédé selon la revendication 1, **caractérisé en ce que** les coordonnées cibles à enregistrer actuellement sont calculées au moyen d'une unité de conversion de coordonnées cibles (28) du dispositif de réglage (20) à partir d'un vecteur de vitesse prescrit spécifié par un dispositif de prescription de mouvement du dispositif de transport de charge (1).

3. Procédé selon l'une des revendications 1 ou 2, **caractérisé en ce que** le dispositif de réglage (20) recherche dans la base de données (23), pour chacun des câbles de positionnement (6a, 6b, 6c, 6d), au moins deux ensembles de données les plus proches des coordonnées cibles à enregistrer actuellement du point cible et de la valeur de mesure de charge actuelle, et détermine par interpolation la longueur de câble de consigne à régler du câble de positionnement (6a, 6b, 6c, 6d) respectif sur la base des longueurs de câble de consigne calculées préalablement desdits au moins deux ensembles de données les plus proches.

4. Procédé selon l'une des revendications 1 à 3, **caractérisé en ce que** la commande de longueur de câble (22) est munie d'une précommande (38) de la longueur de câble de consigne à régler des câbles de positionnement (6a, 6b, 6c, 6d).

5. Procédé selon l'une des revendications 1 à 4, **caractérisé en ce que** le calcul préalable des longueurs de câble de consigne des câbles de positionnement (6a, 6b, 6c, 6d) calculées préalablement est effectué dans une étape de préparation des données du procédé dans un dispositif de préparation des données (24) du dispositif de transport de charge (1) séparé du dispositif de réglage (20),

un modèle de la cinématique indirecte (30) du dispositif de transport de charge (1) et un dispositif d'optimisation (34) étant déposés dans le dispositif de préparation des données (24), et le modèle de la cinématique indirecte (30) et les valeurs de charge prédéfinies ainsi que les coordonnées cibles prédéfinies des points cibles prédéfinis étant transmis au dispositif d'optimisation (34), et des solutions valables pour les longueurs de câble de consigne des câbles de positionnement (6a, 6b, 6c, 6d) étant déterminées par le dispositif d'optimisation (34) au moyen du modèle de la cinématique indirecte (30) pour les valeurs de charge prédéfinies situées aux coordonnées cibles prédéfinies, et les solutions valables en tant que lesdites longueurs de câble de consigne des câbles de positionnement (6a, 6b, 6c, 6d) sont enregistrées, conjointement avec la valeur de charge respectivement associée et les coordonnées cibles prédéfinies respectivement associées, par le dispositif de préparation des données (24) dans la base de données (23) du dispositif de réglage (20) sous la forme d'un des ensembles de données.

6. Procédé selon la revendication 5, **caractérisé en ce que,** lors de l'étape de préparation des données, le poids spécifique du câble de positionnement respectif (6a, 6b, 6c, 6d) est pris en compte dans le modèle de cinématique indirecte (30) lors du calcul préalable des longueurs de câble de consigne des câbles de positionnement (6a, 6b, 6c, 6d) calculées préalablement.

7. Procédé selon la revendication 5 ou 6, **caractérisé en ce que** l'étape de préparation des données est basée sur au moins une condition d'optimisation parmi :

- la plus petite flèche des câbles de positionnement (6a, 6b, 6c, 6d) ;
- la plus petite force de câble des câbles de positionnement (6a, 6b, 6c, 6d) ;
- la plus petite somme des forces de câble des câbles de positionnement (6a, 6b, 6c, 6d) ;
- la force de câble maximale admissible des câbles de positionnement respectifs (6a, 6b, 6c, 6d) ;
- la plus petite différence des forces de câble des câbles de positionnement (6a, 6b, 6c, 6d) ;
- la déformation élastique des dispositifs de suspension (9).

8. Procédé selon l'une des revendications 5 à 7, **caractérisé en ce qu'**un algorithme de maillage est appliqué lors de l'étape de préparation des données, lequel maille les coordonnées cibles prédéfinies en un maillage de calcul, en particulier un maillage polygonal, en tant que données de maillage de calcul, les données de maillage de calcul comprenant des données de liaison pour relier des coordonnées cibles voisines du point cible prédéfini du dispositif de réception de charge (5) et des valeurs de charge voisines des valeurs de charge prédéfinies, et les données de maillage de calcul sont stockées dans la base de données (23) du dispositif de réglage (20), et les données de maillage de calcul sont prises en compte par le dispositif de réglage (20) lors de la détermination de la longueur de câble de consigne à régler du câble de positionnement respectif (6a, 6b, 6c, 6d).

9. Procédé selon la revendication 8, **caractérisé en ce que** l'étape de préparation des données comprend une itération pour densifier le maillage de calcul dans au moins une zone de bord de l'espace de travail (2), des longueurs de câble de consigne des câbles de positionnement (6a, 6b, 6c, 6d) étant déterminées dans la zone de bord pour des coordonnées supplémentaires de positions supplémentaires du dispositif de réception de charge (5).

10. Procédé selon l'une quelconque des revendications 5 à 9, **caractérisé en ce que** le procédé comprend une étape d'acquisition de paramètres de conception (29) pour calculer les longueurs de câble de consigne calculées préalablement des câbles de positionnement (6a, 6b, 6c, 6d) durant l'étape de préparation des données, les paramètres de conception (29) comprenant au moins l'une des valeurs caractéristiques suivantes :

- la position des points de déroulement du câble des dispositifs de suspension (9), desquels le câble de positionnement respectif (6a, 6b, 6c, 6d) se déroule du dispositif de suspension respectif (9) dans une direction vers le porte-charge (4) ;
- les positions des treuils de positionnement (7) ;
- l'allongement spécifique du câble de positionnement respectif (6a, 6b, 6c, 6d) ;
- la rigidité du dispositif de suspension respectif (9) ;
- le poids propre du porte-charge (4) ;
- le poids propre du dispositif de réception de charge (5) ;
- le centre de masse du porte-charge (4) et/ou du dispositif de réception de charge (5).

Fig. 1

Fig. 2

Fig. 3

Fig. 4

## Fig. 5

Fig. 6

Fig. 7

Fig. 8

Fig. 9

Fig. 10a

Fig. 10b

Fig. 10c

Fig. 10d

Fig. 10e

Fig. 11

Fig. 12

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102009050729 A1

**In der Beschreibung aufgeführte Nicht-Patentliteratur**

- **ETIENNE PICARD** ; **ELIAS TAHOUMI** ; **FRANCK PLESTAN** ; **STÉPHANE CARO** ; **FABIEN CLA-VEAU**. A new control scheme of cable-driven parallel robot balancing between sliding mode and linear feedback. *The 21st IFAC World Congress (IFAC 2020)*, July 2020